Europäisches Patentamt

European Patent Office

Office européen des brevets

(19)

(11) **EP 1 242 911 B1**

(12) **FASCICULE DE BREVET EUROPEEN**

(45) Date de publication et mention
de la délivrance du brevet:
**17.09.2003 Bulletin 2003/38**

(21) Numéro de dépôt: **00993656.8**

(22) Date de dépôt: **21.12.2000**

(51) Int Cl.7: **G06F 17/24**

(86) Numéro de dépôt international:
**PCT/FR00/03643**

(87) Numéro de publication internationale:
**WO 01/048631 (05.07.2001 Gazette 2001/27)**

(54) **DISPOSITIF INFORMATIQUE, PROCEDE ET PRODUIT LOGICIEL POUR LE REMPLISSAGE D'IMPRIMES PAR ORDINATEUR**

COMPUTERVORRICHTUNG, VERFAHREN UND PROGRAMMPRODUKT ZUM AUSFÜLLEN VON DRUCKSACHEN PER COMPUTER

COMPUTER DEVICE, METHOD AND SOFTWARE PRODUCT FOR FILLING PRINTOUTS BY COMPUTER

(84) Etats contractants désignés:
**AT BE CH CY DE DK ES FI FR GB GR IE IT LI LU MC NL PT SE TR**

(30) Priorité: **23.12.1999 FR 9916419**

(43) Date de publication de la demande:
**25.09.2002 Bulletin 2002/39**

(73) Titulaire: **Tomasi, Roland**
**31530 Merenvielle (FR)**

(72) Inventeur: **Tomasi, Roland**
**31530 Merenvielle (FR)**

(74) Mandataire:
**Cabinet BARRE LAFORGUE & associés**
**95, rue des Amidonniers**
**31000 Toulouse (FR)**

(56) Documents cités:
**EP-A- 0 376 420**

• **"ELECTRONIC FORMS, DocNet, Visioneer's PaperPort(R), OmniForm 4.01" INTERNET, [en ligne] 1998, XP002146925 Extrait de l'Internet: <URL:www.interconweb.com/html/p_and_s.h tml > [extrait le 2000-09-06]**

## Description

L'invention concerne un dispositif informatique, un procédé et un produit logiciel pour le remplissage automatique par ordinateur d'imprimés comprenant des marques - notamment pouvant comprendre des cadres, bordures, lignes, colonnes, quadrillages, repères, signes graphiques, signes alphanumériques ... - et dans lesquels des caractères doivent être inscrits et/ou modifiés et/ou effacés.

Malgré le développement constant des techniques informatiques et de communication qui a pour effet de réduire la quantité des supports matériels tels que le papier dans les échanges industriels, commerciaux ou administratifs, il existe encore un nombre considérable de situations où l'on ne peut pas éviter l'emploi d'imprimés à remplir. De tels imprimés peuvent être des formulaires, bordereaux, requêtes, déclarations, tableaux ... devant être complétés par inscription et/ou modification de caractères dans certaines zones prédéfinies de l'imprimé permettant ainsi de fournir une information et, dans certains cas, d'en faciliter la saisie informatique ultérieure. A titre d'exemples de tels imprimés on peut citer les bordereaux de réponse aux appels d'offre des marchés publics ; les déclarations réglementaires - notamment fiscales et sociales - à remplir par les administrés ; les requêtes déposées auprès des administrations pour l'exécution de formalités, pour le paiement de taxes, ou l'obtention de financement, titres, droits ou documents ; les imprimés de contrats cadres tels que les contrats d'assurance ou de vente de véhicules ...

Pour remédier à ce problème, certains organismes ont développé des logiciels spécifiques reproduisant spécifiquement l'imprimé et permettant le remplissage des champs à saisir par ordinateur. Ces logiciels peuvent être fournis par exemple sous forme de produits logiciels enregistrés sur des supports d'enregistrement (progiciels, à charger sur un ordinateur) ou par l'intermédiaire d'un réseau tel que le réseau internet.

Néanmoins, chaque logiciel spécifique est dédié à l'utilisation d'un imprimé particulier et est d'un coût de développement relativement élevé, et il existe encore de nombreuses situations où un tel logiciel spécifique n'est pas disponible, et ne pourra pas l'être compte tenu des faibles enjeux économiques correspondant, et/ou des variations importantes pouvant être rencontrées d'un imprimé à l'autre.

Par exemple, dans le cas des bordereaux de soumission aux appels d'offre de marché public, il n'existe pas un imprimé universel. Au contraire, un imprimé spécifique est réalisé pour chaque appel d'offre par l'administration ou la collectivité selon le cahier des charges de cet appel d'offre. En conséquence, dans toutes les situations, les personnes devant remplir les imprimés (c'est-à-dire compléter au moins certaines de leurs zones par des caractères variables), doivent effectuer ce remplissage manuellement ou à l'aide de machines à écrire traditionnelles, voire par collage d'images (graphismes, dessins, plan, photos, graphiques, calques ...).

De surcroît, avant de réaliser le remplissage de certaines zones, il est parfois nécessaire d'effectuer des traitements d'informations (notamment des calculs, éditions ou mises en forme de textes ou / et d'images, ...).

Toutes ces opérations sont longues, parfois relativement complexes ou au contraire répétitives et fastidieuses, et coûteuses en main d'oeuvre. Elles obligent les usagers à conserver des méthodes et outils de travail maintenant obsolètes et retardent l'intégration de l'informatique dans les entreprises.

Dans tout le texte, on adopte la terminologie suivante :

- caractère : tout symbole graphique, y compris les caractères alphanumériques, les dessins, plans, graphismes, images, photos, graphiques, signatures, écritures manuelles, empreintes, codes à lecture optoélectronique, ...
- saisir un caractère : inscrire et/ou modifier et/ou effacer tout en partie d'un caractère sur une zone d'un imprimé,
- remplissage d'un imprimé : le fait dans au moins une zone d'une image numérique d'un imprimé de modifier au moins un pixel, notamment pour introduire des signes ou caractères, effacer des signes ou caractères, remplacer des signes

ou caractères par d'autres, c'est-à-dire plus généralement saisir un ou plusieurs caractère(s)...,

- automatiquement : désigne le fait d'exécuter une étape ou une fonction par des moyens informatiques et sous leur contrôle sans nécessité d'un pilotage permanent d'un opérateur humain, même si une ou des action(s) de l'opérateur humain peut (peuvent) être requise(s) ponctuellement au lancement ou au cours de l'exécution de cette étape ou fonction,
- identifier une marque : appliquer à chaque portion d'une image représentant cette marque des moyens permettant de la repérer dans l'image, attribuer un code d'identification commun à chacune de ces portions, et enregistrer ces informations sur une mémoire de masse, ou de façon fugace en mémoire vive pour les utiliser au cours d'un traitement.

L'invention vise donc à fournir une solution au problème susmentionné en proposant un dispositif informatique, un procédé, et un produit logiciel (programme d'ordinateur) permettant le remplissage automatique assisté par ordinateur, d'imprimés quelconques, c'est-à-dire applicable de façon générale à tout imprimé sans nécessiter des opérations de configuration, développement ou programmation longues et complexes.

L'invention vise ainsi à proposer un dispositif informatique, un procédé, et un produit logiciel de remplissage d'imprimés assisté par ordinateur, universels dans leurs applications, et pouvant être utilisés de façon simple, intuitive et rapide par tout utilisateur d'ordinateur non-spécialiste de l'informatique.

L'invention vise aussi à permettre la réalisation simultanée, sur le même équipement, de traitements informatiques permettant d'élaborer et/ou de mettre en forme des caractères à saisir et de faire remplir automatiquement des zones d'un imprimé avec ces caractères à saisir. En particulier, l'invention vise à permettre le calcul automatique des caractères à saisir, et le remplissage automatique des zones d'un imprimé avec ces caractères préalablement calculés.

A ce titre, l'invention vise aussi à proposer un dispositif, un procédé et un produit logiciel offrant des possibilités importantes de configuration et de programmation, pour permettre leur adaptation selon les contraintes ou les besoins de chaque application et/ou de chaque utilisateur.

L'invention vise également à proposer un dispositif informatique, un procédé, et un produit logiciel compatibles avec les équipements informatiques actuels les plus répandus, et notamment avec les fréquences de cadencement des microprocesseurs, les capacités en mémoire vive et en mémoire de masse, et les logiciels d'exploitation des ordinateurs personnels du marché.

L'invention vise aussi à permettre de sécuriser les caractères et les marques d'origine, normalement invariables, des imprimés en empêchant leurs modifications intempestives. L'invention vise aussi à permettre la modification de certains caractères ou marques d'origine d'un imprimé si nécessaire.

Pour ce faire, l'invention concerne un dispositif informatique pour le remplissage automatique par ordinateur d'imprimés comprenant des marques - notamment pouvant comprendre des cadres, bordures, lignes, colonnes, quadrillages, repères, signes, graphiques, logotypes, caractères ou signes alphanumériques, ... - et dans lesquels des caractères doivent être saisis, ce dispositif comprenant des moyens informatiques de traitement numérique adaptés et programmés pour :

- permettre la mémorisation et l'affichage sur un écran d'affichage électronique d'une image, dite image initiale, représentant un imprimé à remplir,
- identifier automatiquement dans l'image initiale des portions correspondant à des images,
- permettre l'ouverture dans cette image initiale d'au moins une fenêtre, dite fenêtre de saisie, couvrant une zone partielle de l'imprimé dans laquelle au moins un caractère doit être saisi,
- puis identifier automatiquement, dans chaque fenêtre de saisie, chacune des portions de l'image initiale, dites portions invariables graphiques, correspondant à des marques s'étendant dans la fenêtre de saisie mais présentant au moins une dimension supérieure à une première valeur prédéterminée et/ ou inférieure à une deuxième valeur prédéterminée.

Avantageusement et selon l'invention les portions invariables graphiques correspondent à des marques s'étendant au-delà d'au moins une dimension définie par rapport à au moins une dimension de la fenêtre de saisie.

Avantageusement et selon l'invention les portions invariables graphiques correspondent à des marques s'étendant au-delà des limites de la fenêtre de saisie.

En variante néanmoins, les portions invariables graphiques peuvent être définies comme correspondant aux marques s'étendant selon au moins une dimension définie de façon absolue. Par exemple pour une image pixélisée les portions invariables graphiques peuvent comprendre les marques dont l'extension (nombre total de pixels contigus, c'est-à-dire qui se touchent ou sont distants d'une valeur inférieure à un seuil prédéterminé en nombre de pixels ou en mesure métrique) est supérieure à un nombre prédéterminé. De même, les portions invariables graphiques peuvent comprendre les marques dont l'extension est inférieure à un nombre prédéterminé (il peut s'agir par exemple de tâches, défauts, de petits caractères imprimés dans l'image initiale...).

Avantageusement et selon l'invention, les moyens informatiques sont adaptés pour :

- permettre l'activation de moyens d'édition de caractères adaptés pour permettre la saisie d'au moins un caractère, dit caractère saisi, et aptes à le placer en un point prédéterminé d'au moins une fenêtre de saisie de l'image initiale,
- modifier automatiquement chaque portion de l'image initiale dans la fenêtre de saisie couverte par au moins un caractère saisi, à l'exception des portions invariables graphiques laissées inchangées, et ainsi générer une image, dite image remplie, de l'imprimé.

Il est à noter que dans un dispositif selon l'invention toute l'image initiale est analysée automatiquement lors d'une étape dans laquelle les différentes marques sont identifiées, et ce avant toute ouverture de fenêtre et saisie d'un caractère quelconque. L'inventeur a en effet constaté que bien que cette étape d'analyse puisse paraître lourde et inutile, elle permet d'obtenir ensuite des avantages prépondérants, et notamment le traitement immédiat de toute fenêtre de saisie et l'identification dans cette fenêtre de saisie des portions invariables graphiques.

Avantageusement et selon l'invention les moyens informatiques sont adaptés pour identifier automatiquement les marques comme portions de l'image initiale ayant une couleur distincte d'une couleur prédéterminée, dite couleur de fond.

Cette couleur de fond peut être déterminée automatiquement comme la couleur attribuée au plus grand nombre de pixels de l'image initiale ou par seuillage (au moins une composante du code couleur inférieure ou supérieure à une valeur seuil prédéterminée) ; ou être définie par l'opérateur par une saisie. Cette couleur de fond correspond à la couleur d'origine du support sur lequel l'imprimé a été réalisé originellement.

L'image initiale de l'imprimé peut être au préalable mémorisée dans une mémoire des moyens informatiques de toute façon appropriée, notamment par simple lecture de l'image de l'imprimé à l'aide d'un lecteur optique d'image (scanneur). Rien n'empêche néanmoins, en variante, de réaliser cette image initiale à l'aide d'outils logiciels implémentés dans les moyens informatiques, ou de lire ou d'enregistrer un fichier représentatif de cette image initiale à partir d'un lecteur d'un support d'enregistrement sur lequel ce fichier est enregistré, ou encore, par transmission via un réseau informatique tel que le réseau internet ou réseau intranet.

L'invention part ainsi du constat simple selon lequel dans une fenêtre de saisie couvrant une zone partielle de l'imprimé (et non la totalité de l'image initiale de l'imprimé), les marques de cette fenêtre qui s'étendent au-delà d'une dimension de valeur prédéterminée - notamment au-delà de la fenêtre - et constituent des portions invariables graphiques sont des marques qui définissent des champs ou zones à remplir de l'imprimé. Non seulement ces portions invariables graphiques ne doivent pas être modifiées, mais elles imposent les dimensions des caractères saisis correspondant, et permettent de calculer automatiquement ces dimensions.

Il est à noter que certains programmes et/ou dispositifs connus de traitement de texte ou d'images incorporent une possibilité, qui permet de superposer à l'écran deux images, dont une image de fond qui pourrait comprendre des marques, et une nouvelle image pouvant comprendre des modifications à incorporer dans l'image de fond. Néanmoins cette possibilité ne permet pas d'identifier des portions invariables graphiques dans des fenêtres de saisie, et donc de les différencier des autres éléments de l'image (caractères, tâches, fond ...). Cette possibilité ne permet pas de prendre en compte ces portions invariables graphiques en tant que telles et de traiter indépendamment les caractères saisis et/ou les autres éléments de l'image de fond. Ainsi, cette possibilité ne permet pas de déterminer automatiquement la taille et la position des caractères saisis, ou d'effacer automatiquement des caractères initiaux existants dans l'image de fond pour les remplacer par des caractères saisis, et ce sans risque de modifications des portions invariables graphiques.

Avantageusement et selon l'invention, les moyens informatiques sont adaptés pour identifier automatiquement dans chaque fenêtre de saisie, chacune des portions de l'image initiale, dite caractère initial, correspondant à une marque s'étendant entièrement dans la fenêtre de saisie, et qui n'est pas identifiée comme une portion invariable graphique.

Dans une variante de l'invention, on peut vouloir effacer les portions invariables graphiques pour ne conserver que les caractères initiaux, par exemple pour effectuer une reconnaissance de caractères uniquement sur les caractères initiaux. Ainsi, avantageusement et selon l'invention, les moyens informatiques sont adaptés et programmés pour modifier automatiquement chaque portion de l'image initiale dans la fenêtre de saisie en éliminant les portions invariables graphiques et en conservant les caractères initiaux.

Avantageusement et selon l'invention, les moyens informatiques sont adaptés pour, avant de modifier l'image de la fenêtre de saisie pour réaliser l'image remplie, effacer dans la fenêtre de saisie au moins chacun des caractères initiaux qui serait au moins partiellement couvert par un caractère saisi.

Avantageusement, le dispositif selon l'invention est aussi caractérisé en ce que les moyens informatiques comprennent un programme de reconnaissance de caractères apte à attribuer à chaque caractère initial selon sa forme, un code d'identification - notamment un code ASCII - mémorisé de l'une des formes d'objets connues d'une famille de formes d'objets connues prédéterminées, et en ce que les moyens informatiques sont adaptés et programmés pour exécuter ce programme de reconnaissance de caractères pour au moins les caractères initiaux identifiés dans au moins une fenêtre de saisie. Les caractères initiaux reconnus peuvent ensuite être traités par un programme de traitement de données pour les remplacer par des caractères saisis et/ou les modifier et/ou les effacer en tout ou partie, et les inclure à nouveau dans l'image pour former l'image remplie.

Ainsi, avantageusement et selon l'invention, les moyens informatiques comportent au moins un programme de traitement numérique de données choisi parmi un tableur, un programme de traitement de texte, et un programme de traitement numérique d'images, configuré selon des conditions prédéterminées relatives à l'imprimé à remplir, des moyens pour permettre à l'utilisateur d'associer chaque fenêtre de saisie à une entrée ou une sortie d'un programme de traitement numérique de données, et les moyens informatiques sont adaptés pour définir en tant que caractère(s) saisi(s) des données générées par le programme de traitement numérique de données.

Dans le cas par exemple d'imprimés constitués de bordereaux de soumission à un appel d'offre de marché public, il est le plus souvent nécessaire de saisir des quantités et des prix unitaires, et de calculer des montants par article, un prix total hors taxes, la taxe sur la valeur ajoutée, le prix toutes taxes comprises des montants par tranche de marché, et des montants à ajouter à des montants calculés précédemment (pour d'autres imprimés) et gardés en mémoire. Des fenêtres de saisie peuvent être définies pour les zones correspondant à ces données, et associées à un fichier préconfiguré d'un logiciel tableur de sorte que les caractères initiaux reconnus sont traités comme des données dans ce fichier, modifiés et/ou complétés et/ou effacés, puis réintroduits dans l'image à titre de caractères saisis pour former l'image remplie.

La réintroduction des caractères saisis à partir du fichier du tableur modifié peut être automatiquement effectuée par les moyens informatiques.

Différents formats connus d'enregistrement de l'image peuvent être utilisés.

Avantageusement et selon l'invention, le dispositif est caractérisé en ce que l'image initiale est une image numérique pixélisée, et ce que les moyens informatiques comprennent des moyens d'analyse de l'image initiale adaptés pour générer automatiquement une liste dynamique de marques de cette image initiale, chaque marque de cette liste étant formée d'un seul ensemble de pixels contigus repérés par leurs coordonnées et ayant un code de couleur satisfaisant à au moins une condition prédéterminée.

Dans tout le texte l'expression "pixels contigus" désigne tout ensemble de pixels dans lequel chaque pixel est distant d'au moins un autre pixel de l'ensemble d'une distance inférieure ou égale à une valeur prédéterminée. Cette valeur prédéterminée peut être définie par une distance dans toute unité appropriée (millimètres, nombre de pixels ...). Dans le cas le plus simple, cette valeur prédéterminée est égale à 1 pixel, les pixels contigus étant immédiatement voisins des autres.

Ainsi, ces moyens informatiques sont adaptés et programmés pour réaliser des moyens d'analyse de l'image qui regroupent les pixels contigus de même nature (code de couleur satisfaisant à au moins une condition prédéterminée) en séparant et identifiant ainsi des marques invariables distinctes dans l'image initiale de l'imprimé. Par exemple, on identifie ainsi chaque quadrillage, chaque ligne, chaque caractère initial, présent sur l'imprimé. Selon l'invention, l'étape consistant à générer cette liste permet d'identifier automatiquement les marques dans l'image initiale, et constitue donc l'étape correspondante réalisée au préalable.

Avantageusement et selon l'invention, le dispositif est aussi caractérisé en ce que les moyens d'analyse de l'image initiale comportent des moyens de seuillage et/ou filtrage adaptés pour générer automatiquement, à partir de l'image initiale, une image dont les couleurs appartiennent à un groupe d'un nombre prédéterminé - notamment égal à 2 - de couleurs, dont une couleur correspond à la couleur de fond de l'image, et en ce que chaque marque de la liste est un ensemble de pixels contigus ayant un code de couleur distinct du code de la couleur de fond.

Avantageusement et selon l'invention chaque marque de la liste est formée d'un ensemble de pixels contigus ayant le même code de couleur. Réciproquement, chaque ensemble de pixels contigus ayant un même code de couleur (ou, en variante, des codes de couleurs semblables) forme une et une seule marque invariable identifiée par un enregistrement spécifique dans ladite liste.

Par ailleurs, avantageusement et selon l'invention les moyens informatiques sont adaptés pour comparer automatiquement les coordonnées des pixels de chaque marque de la liste, à celles des pixels d'une fenêtre de saisie, pour déterminer automatiquement si l'un d'entre eux appartient à cette fenêtre de saisie, et, si tel est le cas, pour déterminer automatiquement s'il existe des pixels de cette même marque dont les coordonnées sont au-delà de limites prédéterminées - notamment en dehors de celles de la fenêtre de saisie -, de façon à identifier cette marque en tant que portion invariable graphique. De même, avantageusement selon l'invention les moyens informatiques sont adaptés pour comparer automatiquement les coordonnées des pixels de chaque marque de la liste à celles des pixels d'une fenêtre de saisie, pour déterminer automatiquement si l'un d'entre eux appartient à cette fenêtre de saisie, et, si tel est le cas, pour déterminer automatiquement si tous les pixels de cette même marque ont leurs coordonnées incluses dans des limites prédéterminées - notamment dans celles de la fenêtre de saisie -, de façon à identifier cette marque en tant que caractère initial.

Avantageusement et selon l'invention les moyens informatiques sont adaptés pour examiner automatiquement successivement chaque marque de la liste, et,

- si elle est identifiée en tant que portion invariable graphique, ne pas appliquer un programme de reconnaissance de caractères sur cette marque,
- si elle est identifiée en tant que caractère initial, appliquer automatiquement un programme de reconnaissance de caractères sur cette marque.

Pour ce faire, on peut réaliser une image intermédiaire comprenant uniquement les caractères initiaux, les portions invariables graphiques ayant été effacées.

On peut alors soit laisser le caractère initial inchangé, pour lui conserver sa forme authentique, soit ensuite effacer la marque de la fenêtre de saisie correspondant au caractère initial en attribuant la couleur de fond à ses pixels. Néanmoins les pixels correspondant à chaque caractère initial sont encore enregistrés et connus dans la liste. De la sorte, dans le cas où un caractère initial ayant été effacé n'est ensuite pas modifié et doit être réintroduit dans l'image remplie, deux possibilités sont offertes : soit on réintroduit le caractère sous sa forme reconnue et rééditée par les moyens d'édition de caractères, en tant que caractère saisi, soit on réintroduit dans l'image les pixels correspondants mémorisés dans la liste. Dans le deuxième cas, avantageusement selon l'invention les moyens informatiques sont adaptés pour conserver ou incorporer automatiquement dans l'image remplie les pixels des marques de la liste correspondant aux portions invariables graphiques et aux caractères initiaux qui n'ont pas fait l'objet d'une saisie, c'est-à-dire d'un remplacement par un caractère saisi. Ainsi chaque caractère initial non modifié, bien qu'ayant été reconnu, apparaîtra dans l'image remplie sous exactement la même forme que dans l'image initiale, sans modification de police ni de taille. Dans le premier cas au contraire, une modification de forme apparaîtra en général.

Avantageusement et selon l'invention les moyens informatiques sont adaptés pour calculer automatiquement les dimensions de chaque caractère saisi pour que celles-ci soient compatibles avec les portions invariables graphiques et avec la fenêtre de saisie, et que le caractère saisi soit placé correctement dans l'image remplie.

Les caractères saisis peuvent être saisis manuellement par un utilisateur, ou être le résultat d'un programme de traitement de données, ou plus généralement être obtenus automatiquement par un traitement informatique ou à partir d'un réseau de transmission d'informations. Ils sont néanmoins traités par des moyens d'édition de caractères, par exemple un logiciel de traitement de texte, configurés pour adapter la taille des caractères à celles de la fenêtre de saisie comprenant ledit point prédéterminé auquel les caractères saisis doivent être placés. L'emplacement de chaque caractère saisi peut être calculé par les moyens informatiques à partir des caractères initiaux et/ou des portions invariables graphiques, lorsqu'il y en a. Les dimensions et l'emplacement des caractères saisis peuvent aussi être définies par l'utilisateur qui peut imposer un nombre de cellules renfermant des caractères saisis, verticalement et/ou horizontalement, dans chaque fenêtre de saisie.

Avantageusement et selon l'invention les moyens informatiques sont adaptés et programmés pour activer des moyens d'édition de caractères sur commande d'un programme de pointeur déplacé par l'utilisateur en un point prédéterminé d'une fenêtre de saisie de l'image initiale à partir duquel au moins un caractère saisi doit être placé. En variante, ledit point prédéterminé peut être calculé automatiquement par les moyens informatiques à partir des dimensions de la fenêtre de saisie, et de celle des caractères saisis correspondant, pour centrer et/ou ajuster de façon appropriée les caractères saisis à la façon d'un traitement de texte ou d'un tableur.

Avantageusement et selon l'invention les moyens informatiques sont adaptés et programmés pour permettre l'ouverture de chaque fenêtre de saisie par l'utilisateur à l'aide d'un programme de pointeur et d'un programme de multifenêtrage.

Avantageusement et selon l'invention les moyens informatiques sont adaptés pour permettre la reproduction de l'image remplie sous forme stable notamment par impression, ou mémorisation sur un support d'enregistrement, ou transmission sur un réseau, sous forme cryptée ou non. Dans la variante la plus courante, l'image de l'imprimé "rempli" ainsi obtenue peut donc être imprimée sur une imprimante pour former un document imprimé pouvant être ensuite utilisé comme un imprimé original rempli manuellement. Mais l'invention ouvre de surcroît des perspectives plus importantes pour la transmission et l'utilisation d'imprimés via des réseaux de transmission de type intranet ou internet.

L'invention s'étend à un procédé mis en oeuvre dans un dispositif selon l'invention. L'invention concerne ainsi, dans un dispositif informatique comprenant des moyens informatiques de traitement numérique et au moins un écran d'affichage électronique, un procédé de remplissage automatique par ordinateur d'imprimés comprenant des marques - notamment pouvant comprendre des cadres, bordures, lignes, colonnes, quadrillages, repères, signes, graphiques, caractères ou signes alphanumériques, ... - et dans lesquels des caractères doivent être saisis, ce procédé comprenant les étapes suivantes :

- afficher sur un écran d'affichage électronique une image, dite image initiale, représentant un imprimé à remplir,
- identifier automatiquement dans l'image initiale des portions correspondant à des marques,
- ouvrir, dans cette image initiale, au moins une fenêtre, dite fenêtre de saisie, couvrant une zone partielle de l'imprimé dans laquelle au moins un caractère doit être saisi,
- puis identifier automatiquement, dans chaque fenêtre de saisie, chacune des portions de l'image initiale, dites portions invariables graphiques, correspondant à des marques s'étendant dans la fenêtre de saisie mais présentant au moins une dimension supérieure à une première valeur prédéterminée et/ou inférieure à une deuxième valeur prédéterminée.

Avantageusement, un procédé selon l'invention est aussi caractérisé par les étapes suivantes :

- activer des moyens d'édition de caractères adaptés pour permettre la saisie d'au moins un caractère, dit caractère saisi, et aptes à le placer en un point prédéterminé d'au moins une fenêtre de saisie de l'image initiale,
- modifier automatiquement chaque portion de l'image initiale dans la fenêtre de saisie couverte par au moins un caractère saisi, à l'exception des portions invariables graphiques laissées inchangées, et ainsi générer une image, dite image remplie, de l'imprimé.

L'invention concerne aussi un procédé caractérisé par tout ou partie des étapes effectuées par un dispositif selon l'invention, comme mentionné ci-dessus ou ci-après.

L'invention s'étend à un produit logiciel apte à être chargé dans la mémoire vive d'un système informatique pour la mise en oeuvre d'un procédé selon l'invention, de façon à réaliser un dispositif informatique selon l'invention.

Ce produit logiciel est un programme d'ordinateur pouvant être mis à disposition sur un réseau de transmission d'information, et adapté pour être directement chargé en mémoire vive interne d'un ordinateur. Il peut aussi être proposé sous la forme d'un support d'enregistrement. L'invention s'étend donc aussi à un support d'enregistrement adapté pour pouvoir être lu par un lecteur relié à un système informatique, caractérisé en ce qu'il comprend un programme enregistré adapté pour pouvoir être chargé en mémoire vive du système informatique et le programmer pour mettre en oeuvre un procédé selon l'invention, de façon à réaliser un dispositif informatique selon l'invention. Un support d'enregistrement selon l'invention comprend donc un produit logiciel selon l'invention et permet, lorsqu'il est lu sur un lecteur d'un ordinateur, le produit logiciel étant chargé en mémoire vive, le remplissage d'imprimés par ordinateur.

L'invention s'étend à un dispositif informatique, un procédé, un produit logiciel et un support d'enregistrement caractérisés en combinaison par tout ou partie des caractéristiques apparaissant ci-dessus ou ci-après.

Par ailleurs, l'invention concerne de façon plus générale un procédé de traitement numérique d'une image numérique pixélisée caractérisé en ce que :

- on identifie dans l'image des portions correspondant à des marques ayant un code de couleur satisfaisant à au moins une condition prédéterminée,
- on génère automatiquement une liste dynamique de toutes les marques de l'image, chaque marque de la liste étant formée d'un et d'un seul ensemble de pixels contigus repérés par leurs coordonnées.

Ainsi, l'invention permet de reconnaître et d'isoler automatiquement les différentes marques d'une image numérique, puis de traiter cette image non pas à partir des pixels, mais de la liste dynamique ainsi créée dont chaque enregistrement comprend et regroupe les coordonnées de chaque marque. Il est alors possible d'effectuer des traitements d'analyse ou de reconnaissance beaucoup plus simples et rapides que dans l'art antérieur. Avantageusement et selon l'invention, on détermine (automatiquement (par seuillage ou en considérant la couleur du plus grand nombre de pixels) ou par choix de l'opérateur) un code de couleur de fond, et on génère une liste qui n'incorpore que des marques ayant un code couleur différent du code de couleur de fond.

Seule l'information utile contenue dans l'image est donc mémorisée dans la liste, et tous les pixels du fond d'image, en général les plus nombreux, ne sont pas mémorisés, ce qui réduit considérablement la taille en mémoire de la liste. On obtient donc un fichier de taille réduite mais incorporant toute l'information utile de l'image.

Cela n'est cependant possible que si un fond peut être effectivement défini, comme dans le cas d'un texte ou d'un bordereau imprimé (le fond étant alors formé des pixels de la couleur d'un support d'origine sur lequel l'imprimé a été réalisé). A l'inverse cela n'est pas possible lorsque l'imprimé contient des informations utiles sur toute sa surface comme par exemple dans le cas d'une photographie.

D'autres buts, caractéristiques et avantages de l'invention apparaissent à la lecture de la description suivante qui se réfère aux figures annexées dans lesquelles :

- la figure 1 est sur un schéma illustrant un exemple de dispositif informatique selon l'invention,
- la figure 2 est un schéma montrant un exemple d'image initiale d'imprimé à remplir avec un dispositif, un procédé et un produit logiciel selon l'invention,
- la figure 3 est un schéma montrant un exemple de fenêtre de saisie pouvant être ouverte avec un dispositif, un procédé et un produit logiciel selon l'invention,
- les figures 4a à 4d sont des schémas représentant un exemple de portion de l'image initiale à une échelle agrandie pour permettre la distinction des pixels, et de matrices numériques correspondant à cette portion, à différentes étapes permettant d'isoler et de codifier les marques de cette portion d'image initiale dans une liste dynamique, avec un dispositif, un procédé et un produit logiciel selon l'invention,
- la figure 5 est un schéma illustrant un exemple de liste dynamique créée par un dispositif, un procédé et un produit logiciel selon l'invention,
- la figure 6a, 6b, 7a, 7b, 8, 9a, 9b et 10 sont des organigrammes montrant différentes étapes pour l'édition et la saisie dans un procédé, un dispositif et un produit logiciel selon l'invention,
- la figure 11 est un schéma illustrant une portion de fenêtre de saisie dans laquelle on identifie une portion invariable graphique et un caractère initial avec un procédé, un dispositif et un produit logiciel selon l'invention,
- les figures 12a à 12f sont des schémas illustrant différentes étapes pour le traitement des caractères initiaux, et l'incorporation de caractères saisis dans la fenêtre de saisie de la figure 3,
- la figure 13 est un schéma montrant un exemple d'image remplie obtenue selon l'invention à partir de l'image initiale d'un imprimé de la figure 2.
- la figure 14 est un organigramme illustrant un procédé selon l'invention permettant d'obtenir une carte contour selon la figure 4b à partir d'une image filtrée selon la figure 4a,

- les figures 15a, 15b, 15c, 15d, et 15e sont des organigrammes illustrant un procédé selon l'invention permettant d'obtenir une carte séparation selon la figure 4c à partir d'une image contour selon la figure 4b,

- la figure 16 est un organigramme illustrant un procédé selon l'invention permettant d'obtenir une carte marques selon la figure 4d à partir de la carte séparation selon la figure 4c.

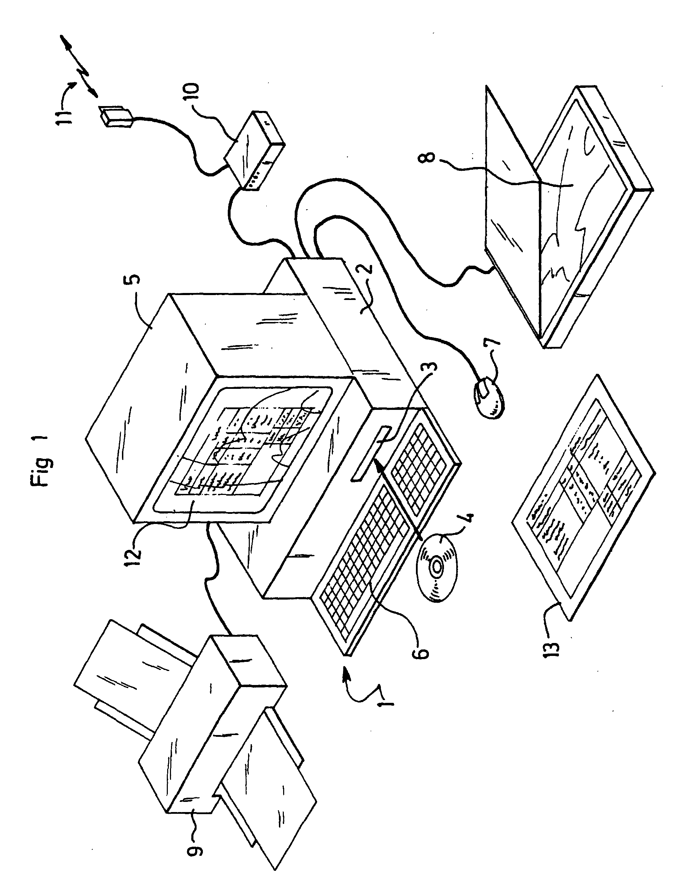

La figure 1 représente un exemple de dispositif informatique selon l'invention comprenant un micro-ordinateur 1 comportant une unité centrale 2 à microprocesseur(s), un lecteur 3 de supports d'enregistrements 4 tels que des disques - notamment des CD-ROM -, un écran 5, un clavier 6, une souris 7 ou autre dispositif de pointage, un scanneur 8 optique, une imprimante 9, un modem 10 de connexion à un réseau 11 de transmission de données tel que le réseau commuté téléphonique permettant d'accéder au réseau INTERNET. Bien entendu, le dispositif 1 représenté figure 1 n'est qu'un exemple et de nombreuses autres configurations sont possibles (micro-ordinateur portable, autres lecteurs de supports d'enregistrement ou autres périphériques associés, remplacement de la souris 7 par un écran tactile, un dispositif de pointage à boule, ...).

Le micro-ordinateur 1 est également doté de logiciels traditionnels permettant son fonctionnement, et en particulier d'un système d'exploitation comprenant un logiciel de multifenêtrage, - notamment WINDOWS ® commercialisé par la société MICROSOFT CORPORATION (U.S.A.), ou Mac Os ® commercialisé par la société Apple Computer (U.S.A.), ou Be Os ® commercialisé par la société Be (France), ou X-WINDOWS ® commercialisé par la société SUN MICROSYSTEMS (U.S.A.) -, et un logiciel de pointeur - notamment un logiciel de gestion de souris compatible avec le logiciel de multifenêtrage -.

L'unité centrale 2 incorpore au moins un microprocesseur et ses composants associés, notamment au moins une mémoire morte et au moins une mémoire vive interne. L'unité centrale 2 comprend également en général au moins une carte mère et au moins un bus permettant la connexion de différentes cartes de gestion des périphériques, et une mémoire de masse, généralement sous forme d'au moins un disque dur.

Le micro-ordinateur 1 est adapté et programmé pour permettre la mémorisation sur sa mémoire de masse d'une image numérique, dite image initiale 12, représentant un imprimé 13 à remplir. Dans l'exemple de la figure 1, l'imprimé 13 peut être lu par le scanneur 8 qui forme le fichier numérique représentatif de cet imprimé 13, c'est-à-dire l'image initiale 12, de façon traditionnelle. Un tel qu'un scanneur 8 est connu en lui-même et permet de réaliser des images sous forme pixelisée, ensuite mémorisées sous le disque dur du micro-ordinateur 1. En variante, l'image initiale 12 peut être également transmise à partir du réseau 11 via le modem 10 et mémorisée sur le disque dur du micro-ordinateur 1. Egalement, l'image initiale 12 peut être enregistrée sur un support d'enregistrement lu par un lecteur tel que le lecteur 3 du micro-ordinateur 1. Le dispositif informatique selon l'invention est adapté et programmé pour permettre l'affichage sur son écran 5 de l'image initiale 12 comme représenté figure 1.

Plus généralement, pour la mise en oeuvre de l'invention, un produit logiciel selon l'invention enregistré sur un support d'enregistrement 4 selon l'invention est chargé dans le lecteur 3 et installé sur le micro-ordinateur 1. Les fichiers de programmes et de données correspondants sont copiés sur le disque dur, et le cas échéant, les fichiers de système d'exploitation et d'initialisation correspondants sont modifiés lors de la lecture du support d'enregistrement 4.

Le système d'exploitation et de multifenêtrage WINDOWS ® comprend une bibliothèque de classes de fonctions préprogrammées commercialisée par la société MICROSOFT CORPORATION (U.S.A.) sous la dénomination MICROSOFT ® MFC, permettant de faciliter la programmation sous WINDOWS ®, et pouvant être utilisée pour réaliser un produit logiciel selon l'invention. D'autres bibliothèques semblables et/ou d'autres systèmes d'exploitation et de multifenêtrage peuvent être utilisés (UNIX, MACINTOSH ® ...) de façon semblable.

Lors de l'activation du produit logiciel selon l'invention et de l'ouverture d'une image initiale 12 avec ce produit logiciel (programme), un programme d'édition d'images numériques est lancé pour permettre l'affichage de l'image initiale 12. Ce programme d'édition d'image numérique peut être formé de tout logiciel compatible avec le système d'exploitation du micro-ordinateur 1, et par exemple de la fonction WIN 32 API de la bibliothèque MICROSOFT ® MFC.

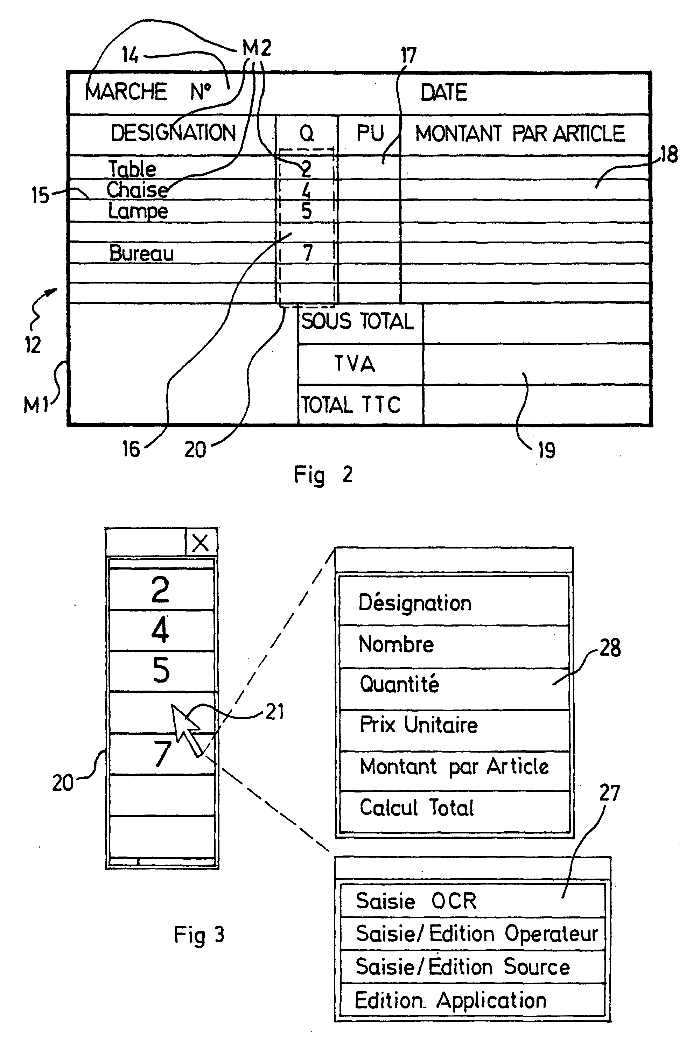

Sur la figure 2 on a représenté un exemple d'image initiale 12 de l'imprimé, qui dans cet exemple, est similaire à un bordereau de soumission à un appel d'offre de marché public. L'image initiale 12 représentée figure 2 est celle de l'imprimé tel qu'il est fourni par une administration avant d'être rempli par les candidats à l'appel d'offre. Bien évidemment, sur la figure 2, on a représenté une version extrêmement simplifiée d'un tel formulaire, aux fins uniquement d'illustration de l'invention.

Comme on le voit, l'image initiale 12 de l'imprimé comprend des marques pré-imprimées qui permettent notamment de définir des zones 14, 15, 16, 17, 18, 19 que le candidat doit remplir par des caractères selon la proposition qu'il souhaite formuler.

Le plus généralement, et dans l'exemple représenté, l'image initiale 12 est une image pixelisée, c'est-à-dire au format dit "bitmap", en noir et blanc. L'invention est néanmoins applicable à d'autres formats d'images, et notamment à des images vectorielles et/ou à des images en couleurs, ayant un nombre de niveaux de couleurs quelconque.

Les marques initiales pré-imprimées de l'image initiale 12 comprennent, dans l'exemple représenté :

- un ensemble M1 de pixels noirs contigus formant un quadrillage et un cadre d'un tableau,
- une pluralité de caractères alphanumériques, dit caractères initiaux M2, chaque caractère initial M2 étant formé d'un ensemble de pixels noirs contigus.

Dans cet exemple, l'imprimé comprend un en-tête 14 permettant la saisie du marché et la date, une colonne 15 de désignation des articles correspondants au marché, une colonne 16 dans laquelle est indiquée la quantité d'articles pour chacun d'eux, une colonne 17 permettant de saisir les prix unitaires par article, une colonne 18 permettant de saisir les montants par article, et une zone 19 permettant le calcul du sous total, de la taxe sur la valeur ajoutée et du total toutes taxes comprises.

Comme indiqué précédemment, l'image initiale 12 est affichée sur l'écran et ce grâce par exemple à une fonction de la bibliothèque WIN 32 API ou de la bibliothèque des classes de fonction MICROSOFT ® MFC du programme de multifenêtrage WINDOWS ®.

Le programme selon l'invention est adapté pour générer une liste dynamique 22 représentative des marques initiales de l'image initiale 12, chaque marque dans cette liste 22 étant formée d'un ensemble de pixels contigus repérés par leurs coordonnées, et ayant un code de couleurs satisfaisant au moins à une condition prédéterminée.

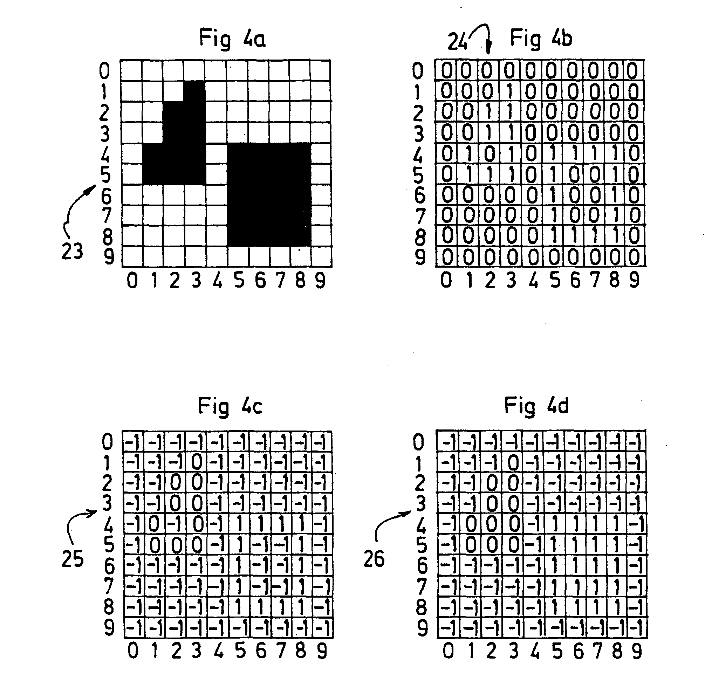

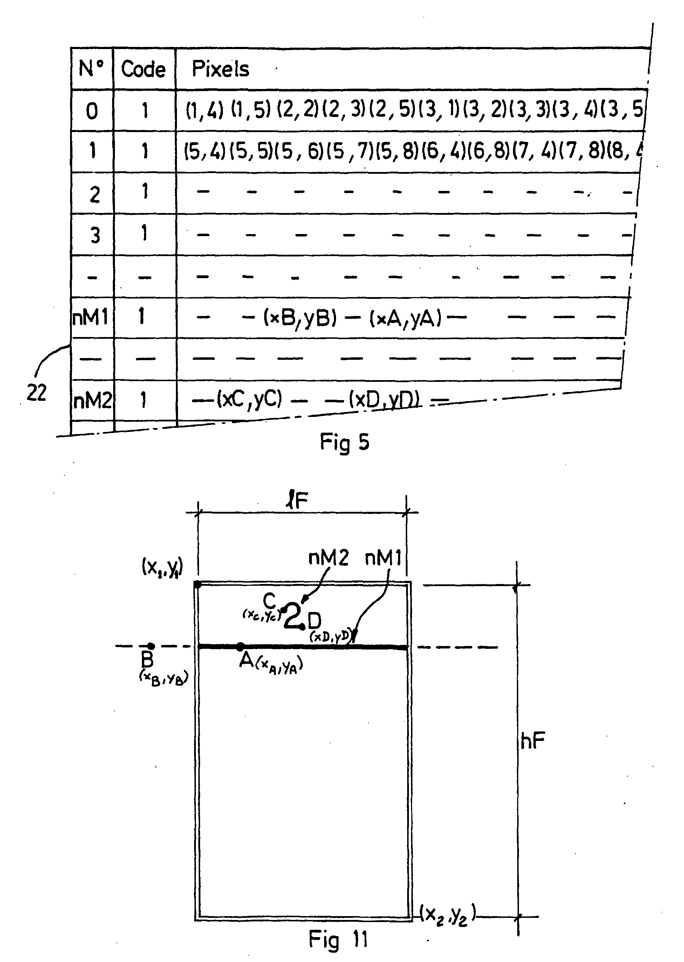

Les figures 4a, 4b, 4c, 4d et 5 illustrent le procédé pouvant être mis en oeuvre pour générer une telle liste dynamique 22. Dans tout le texte, l'expression liste "dynamique" signifie, de façon traditionnelle, une liste dont les dimensions sont à priori inconnues et peuvent varier d'une image initiale 12 à l'autre.

Les images sont mémorisées dans le micro-ordinateur 1 sous forme de matrices de données numériques, dites cartes, contenant les informations de chaque pixel. Chaque nombre de la carte représente ainsi un pixel de l'image, qui est donc repéré dans la carte par ses coordonnées $(x, y)$ dans la carte correspondante. Les coordonnées d'un pixel sont des nombres entiers naturels. Par convention, l'origine de coordonnées $(0, 0)$ est le pixel situé à l'angle supérieur gauche de l'image.

Tout d'abord, on réalise sur l'image initiale 12 un traitement de seuillage et de filtrage, connu en soi, adapté pour générer une image dont les couleurs appartiennent à un groupe d'un nombre prédéterminé de couleurs comprenant une couleur de fond de l'image (défini par l'utilisateur ou calculé comme la couleur du plus grand nombre de pixels de l'image, ou une couleur prédéterminée dont le code couleur est minimum ou maximum). Dans l'exemple représenté, le traitement de seuillage et de filtrage fournit une image contrastée en noir et blanc. On a représenté figure 4a à une échelle agrandie une portion d'image obtenue à partir d'une image initiale 12 après un traitement de seuillage et de filtrage. Cette image est dite image filtrée 23. A titre de traitement de seuillage et de filtrage, on peut par exemple utiliser un procédé basé sur les algorithmes de HECKBERT.

Soit une carte K déterminée quelconque. On appelle pixel interne de K, tout pixel de la carte K qui n'est situé ni dans la première colonne, ni dans la dernière colonne, ni dans la première ligne, ni dans la dernière ligne de cette carte K. On appelle pixel coin de K, tout pixel de cette carte K dont les coordonnées x et y sont celles de la première ou de la dernière colonne, et de la première ou de la dernière ligne de la carte K. On appelle pixel bord de K, tout pixel de la carte K qui n'est ni un pixel interne ni un pixel coin.

On appelle voisinage U (P ; K) l'ensemble des pixels P de la carte K qui sont différents du pixel P mais le touchent directement. Le voisinage d'un pixel interne comprend huit pixels. Le voisinage d'un pixel bord comprend cinq pixels. Le voisinage d'un pixel coin comprend trois pixels. A partir de l'image filtré 23, on construit une carte, dite carte contour 24, comme représenté figure 4b. On part d'une carte dont tous les éléments sont fixés à zéro. On parcourt ensuite l'image filtrée 23, colonne après colonne, et, dans chaque colonne, pixel par pixel, puis ligne après ligne, et dans chaque ligne, pixel par pixel. On examine à chaque pixel le code couleur (noir ou blanc dans l'exemple de la figure 4a) du pixel et on compare ce code couleur à la valeur du pixel examiné immédiatement précédemment. Si le code couleur du pixel en cours d'examen n'est pas identique à celui du pixel précédent, il s'agit d'un pixel où la couleur de l'image est modifiée, que l'on désigne pixel de changement. Il y a alors deux cas :

1) on vient de passer de l'extérieur d'une marque à l'intérieur d'une marque ; dans ce cas, le pixel en cours d'examen est un pixel, dit pixel contour, qui forme le contour périphérique d'une marque dans l'image initiale 12 ; sa valeur est alors placée à 1 dans la carte contour 24 ;

2) on vient de passer de l'intérieur d'une marque à l'extérieur d'une marque ; dans ce cas le pixel en cours d'examen est situé à l'extérieur de la marque et n'appartient pas à cette marque ; par contre le pixel précédant immédiatement est un pixel contour et sa valeur est placée à 1 dans la carte contour 24.

Pour différencier ces deux cas, on compte le nombre q de pixels changement de la colonne parcourue et rencontrés auparavant au cours de l'examen des différents pixels. La valeur initiale de q est fixée à 1 pour chaque nouvelle colonne, de sorte que q prend la valeur 2 pour le premier pixel changement de la colonne. Ainsi, on sait que si q est un nombre pair lors de la détection d'un pixel changement, il s'agit du cas 1), et si q est un nombre impair, il s'agit du cas 2).

En examinant successivement tous les pixels de l'image filtrée 23, on obtient la carte contour 24 dans laquelle les pixels délimitant le contour de chaque marque sont représentés par la valeur 1.

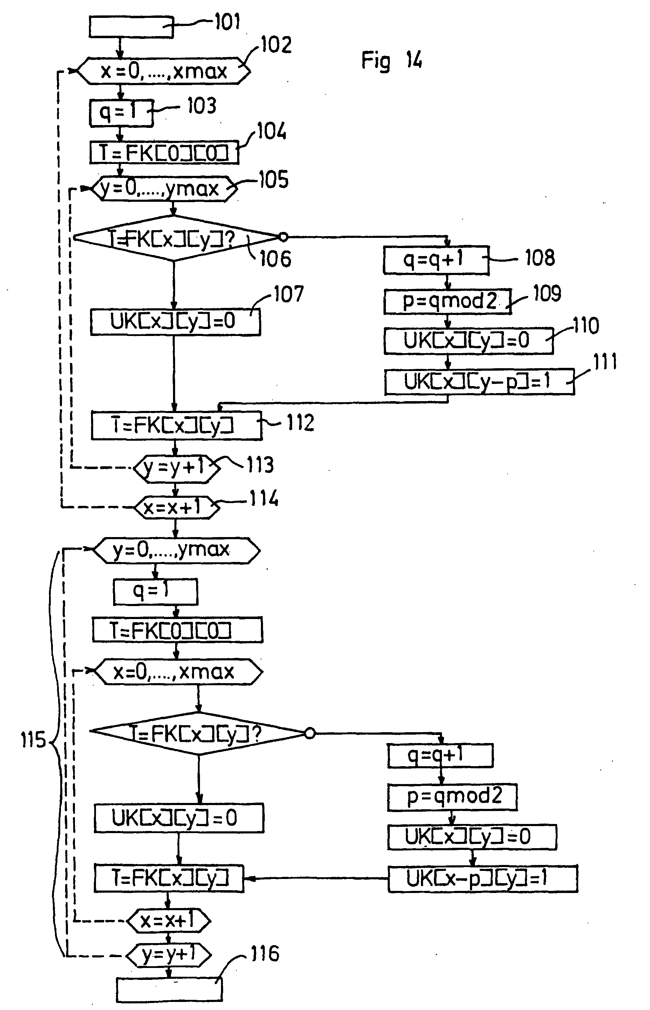

La figure 14 est un exemple d'organigramme permettant la mise en oeuvre du procédé décrit ci-dessus pour l'obtention de la carte contour 24 à partir de l'image filtrée 23. Sur cette figure, après l'étape 101 de départ, on ouvre une boucle lors de l'étape 102 qui permet de parcourir les abscisses x, de 0 à xmax, c'est-à-dire les pixels de l'image filtrée 23 ligne par ligne.

On initialise la variable q à 1 lors de l'étape 103. Lors de l'étape 104, on initialise la valeur du code couleur T par celle FK[0] [0] qui est le code couleur du point de coordonnées (0, 0) de l'image filtrée 23.

Dans les organigrammes des figures 14, 15a à 15e, et 16 on adopte la terminologie suivante :

- FK[x] [y] : le code couleur du pixel de coordonnées (x, y) de l'image filtrée 23,
- UK[x] [y] : le code du pixel de coordonnées (x, y) de l'image contour 24,
- SK[x] [y] : le code du pixel de coordonnées (x, y) de la carte séparation 25, ou de la carte marques 26,
- S[N] : symbole de numéro N dans la liste dynamique 22,
- P(x, y) : pixel de coordonnées (x, y).

Lors de l'étape subséquente 105, on ouvre une boucle sur les ordonnées y des pixels de l'image filtrée 23, de 0 à la valeur maximum ymax.

Dans l'étape 106 ultérieure, on examine si la variable T est égale au code couleur du point courant de coordonnées (x, y), soit FK[x] [y]. Si tel est le cas, on fixe le code de la carte contour 24 en ce pixel à 0 lors de l'étape 107. Si tel n'est pas le cas, on incrémente la variable q d'une unité lors de l'étape 108, puis on calcule la valeur d'une variable p qui est égale à 0 si q est paire et 1 si q est impaire, lors de l'étape 109. Lors de l'étape subséquente, on fixe le code du pixel de coordonnées (x, y) de la carte contour 24 à 0, puis, lors de l'étape 111, on fixe le code du pixel de coordonnées (x, y-p) à 1. Les étapes 107 et 111 aboutissent toutes deux à l'étape 112 lors de laquelle on modifie la variable T en lui donnant la valeur du code de couleur du pixel de coordonnées (x, y) de l'image filtrée 23. Lors des étapes ultérieures 113 et 114, on termine les boucles en incrémentant y d'une unité et, respectivement, x d'une unité. Lorsque toute l'image filtrée 23 a été ainsi parcourue, on réitère l'ensemble du procédé décrit ci-dessus en exécutant les étapes référencées 115 figure 14 qui sont semblables aux précédentes, mais dans lesquelles les deux boucles sur l'abscisse x et l'ordonnée y sont inversées, la boucle sur les ordonnées y étant ouverte la première. En outre on remplace l'étape 111 par une étape dans laquelle on fixe à 1 le code du pixel de coordonnées (x-p, y) une fois l'ensemble de ce procédé 115 exécuté, on termine lors de l'étape 116 de fin.

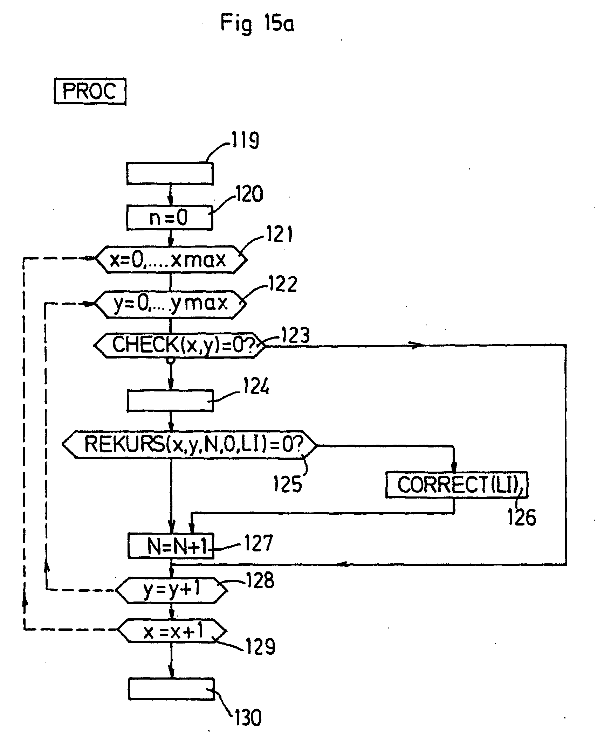

A partir de la carte contour 24, on crée une carte, dite carte séparation 25, telle que représentée dans la figure 4c dans laquelle les différentes marques sont séparées les unes des autres. Pour ce faire, on initialise à -1 tous les pixels de cette carte séparation 25, puis on exécute le procédé PROC représenté figure 15a.

Ce procédé commence par une étape 110 de départ, puis une étape 120 lors de laquelle on initialise la variable n à 0, puis une étape 121 d'ouverture d'une boucle sur les abscisses x de la carte contour 24, puis une étape d'ouverture d'une boucle 122 sur les ordonnées y de la carte contour 24.

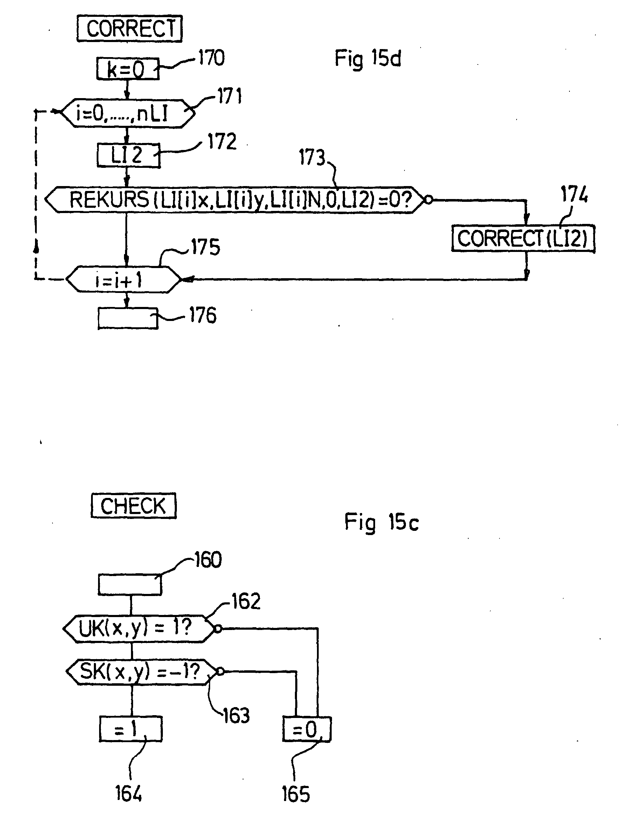

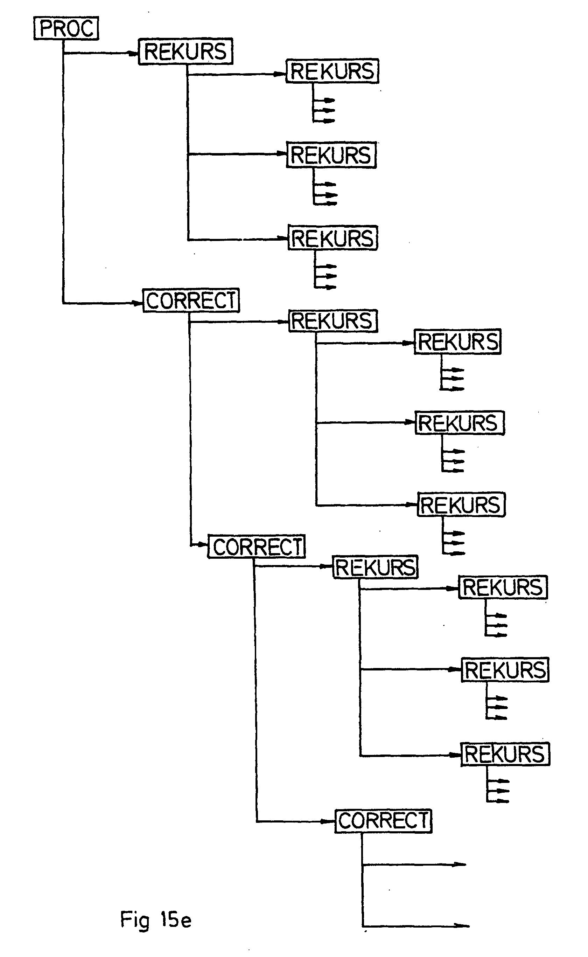

Pour chaque pixel, on exécute lors de l'étape 123 une fonction, dite fonction CHECK conforme à l'organigramme représenté figure 15c. Après une étape 160 de départ, on examine dans l'étape 162 si le code de la carte contour 24 au pixel courant de coordonnées (x, y) est égal à 1. Si tel n'est pas le cas, la fonction CHECK est fixée à 0 lors de l'étape 165 c'est-à-dire que CHECK (x, y) = 0. Si tel est le cas, on examine lors de l'étape 163 si le code de la carte séparation 25 au pixel de coordonnées (x, y) est égal à -1. Si tel n'est pas le cas, on exécute l'étape 165 où l'on fixe la valeur de la fonction CHECK à 0. Si tel est le cas, la valeur de la fonction CHECK est fixée à 1 lors de l'étape 164. Ainsi, comme on le comprend, lorsque la fonction CHECK est égale à 0, on sait que le pixel a fait l'objet d'un traitement, ou n'est pas un pixel contour. Si par contre la fonction CHECK est égale à 1, on sait qu'il s'agit d'un pixel qui n'a pas encore fait l'objet d'un traitement par le procédé PROC et qui est un pixel contour. Ainsi, lors de l'étape 123 de la figure 15a, si l'on constate que la fonction CHECK est égale à 0, on passe directement à l'étape 128 de fin de boucle sur les ordonnées y. Par contre, si la valeur de cette fonction CHECK n'est pas égale à 0, on crée un nouvel enregistrement dans la liste dynamique lors de l'étape 124, de façon à pouvoir y insérer une nouvelle marque. Pour ce faire, on attribue à une nouvelle marque une valeur N, dite code de marque N, qui est un entier naturel permettant de numéroter les marques dans la liste dynamique 22. La première valeur de N est égale à 0. On crée alors une liste dynamique telle que représentée figure 5 dont la première colonne représente les codes de marques N et la deuxième colonne représente le code couleur correspondant, et dans laquelle chaque ligne comprend les différents pixels identifiés de la marque.

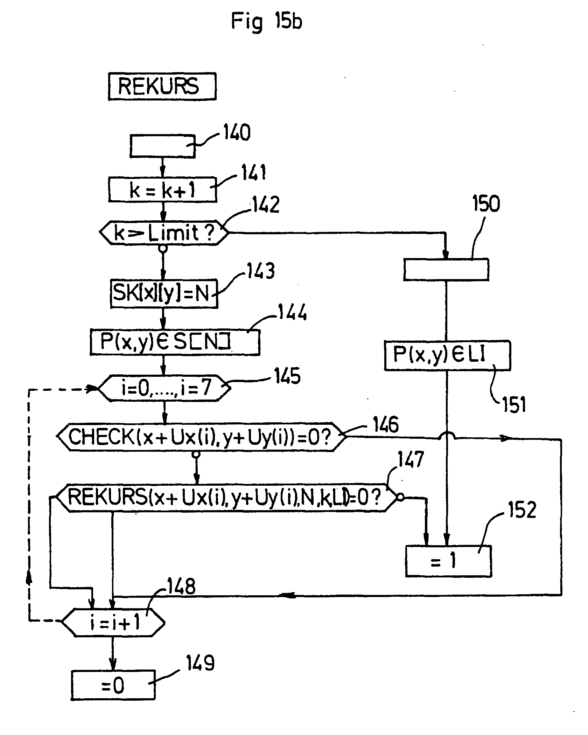

On exécute ensuite une fonction REKURS, dont l'organigramme est représenté figure 15b, et qui permet d'examiner successivement les différents pixels du voisinage du pixel courant. L'étape 140 est une étape de départ, puis, dans l'étape 141, on incrémente d'une unité une variable k qui est initialement fixée à 0, et qui permet de calculer le nombre de fois que la fonction REKURS a été exécutée. En effet, cette fonction REKURS est une fonction qui s'appelle elle-même et qui est donc récurrente. Or, on sait que les systèmes informatiques ont des possibilités de récurrence limitée. Le procédé décrit figure 15b permet ainsi d'interrompre le nombre de récurrences exécutées simultanément afin de ne pas dépasser les possibilités du système informatique utilisé. Ces possibilités sont définies par une constante désignée Limit qui est prédéterminée et peut être confirmée à l'installation par l'opérateur. Dans l'étape 142, on examine donc si la variable k est ou non supérieure à Limit. Si tel n'est pas le cas, on fixe le code de la carte séparation 25 à la valeur du code de marque N courante lors de l'étape 143, puis on inscrit le pixel P (x, y) courant dans la liste dynamique 22, c'est-à-dire dans la marque dont le code de marque est N, lors de l'étape 144.

On ouvre ensuite lors de l'étape 145 une boucle qui permet de parcourir tous les pixels du voisinage du pixel P(x, y). Cette boucle est effectuée sur un indice i qui varie de 0 à 7 et qui permet de faire varier les incréments d'une unité pour les abscisses et les ordonnées Ux(i) et Uy(i) par rapport aux coordonnées (x, y) du pixel courant. Ces incréments Ux(i) et Uy(i) prennent l'une des trois valeurs 0, 1, et -1, et les huit combinaisons distinctes de la combinaison (0, 0) pouvant être formées avec ces trois valeurs déterminent les pixels du voisinage du pixel P(x, y). Chaque combinaison correspond à l'une des valeurs de l'indice i, c'est-à-dire que le point de coordonnées (x+Ux(i), y+Uy(i)), est l'un des points voisinages du pixel de coordonnées (x, y).

Lors de l'étape 146, on exécute la fonction CHECK précédemment décrite pour chaque point voisinage et on examine si la valeur est égale à 0 ou non. Si tel est le cas, on passe directement à l'étape 148 de fin de boucle, c'est-à-dire qu'on passe au point voisinage suivant. Si tel n'est pas le cas, on exécute à nouveau la fonction REKURS pour ce point voisinage, pour ce code de marque N, et on examine si la valeur obtenue est égale ou non à 0 lors de l'étape 147. Lorsque la valeur de la fonction REKURS est égale à 0, cela signifie qu'elle a pu être intégralement exécutée pour tous les points voisinages et tous les points contours de la marque de code N, sans interruption des récursions. Si au contraire la valeur de la fonction REKURS est différente de 0 et est égale à 1, on sait que l'on a atteint la valeur Limit et donc qu'il faut recommencer les itérations récursives. C'est la raison pour laquelle, si l'on détecte que la fonction REKURS pour le point voisinage courant d'indice i n'est pas égale à 0 lors de l'étape 147, on fixe la valeur de la fonction REKURS calculée pour le point courant (x, y) à 1 lors de l'étape 152. Si au contraire la valeur REKURS pour le point voisinage est égale à 0, on exécute l'étape 148 de fin de boucle pour parcourir les différents points du voisinage, c'est-à-dire qu'on incrémente l'indice i d'une unité.

Lorsque tous les points voisinages ont été examinés, si cela s'est avéré possible, on fixe donc la valeur de la fonction REKURS à 0 lors de l'étape 149.

Si lors de l'étape 142, on constate que le nombre de récursions maximum Limit a été dépassé, on ajoute dans une liste, dite liste de correction LI, le pixel de coordonnées (x, y) courant auquel on interrompt les récursions. Cet ajout s'effectue dans l'étape 151 qui est immédiatement précédé d'une étape 150 lors de laquelle on augmente d'une unité la longueur de la liste LI. Après l'étape 151, on fixe la valeur de la fonction REKURS à 1 lors de l'étape 152, permettant de détecter que les récursions se sont interrompues.

Dans le procédé général PROC, si l'on détecte lors de l'étape 125 que la fonction REKURS n'est pas égale à 0, et donc qu'une interruption est intervenue, on exécute lors de l'étape 126, une fonction CORRECT(LI) dont l'organigramme est représenté figure 15d. Cette fonction permet de recommencer la fonction REKURS précédemment décrite à partir de chacun des nLI pixels de la liste LI, mais en ayant réinitialisé la valeur de récursion k à 0, puisque l'on repart du résultat de l'ensemble des récursions précédentes. Cette fonction comprend une étape de départ 170 lors de laquelle on réinitialise k à 0, puis une étape 171 lors de laquelle on ouvre une boucle sur l'indice i, de 0 à nLI nombre de pixels de la liste LI, permettant de parcourir les différents pixels mémorisés dans la liste LI précédemment, lors de l'exécution de chacune des fonctions REKURS. Dans cette boucle, on efface tout d'abord lors de l'étape 172 une liste dynamique locale LI2. Puis, lors de l'étape 173, on exécute la fonction REKURS pour le pixel courant, repéré par l'indice i, de la liste LI, avec la valeur de code de marque N courante, la valeur de la variable k à 0, et en utilisant, à titre de liste d'interruption, non pas la liste LI, mais la liste locale LI2. Lors de cette étape 173, on examine également si la valeur retournée par la fonction REKURS est égale ou non à 0. Si tel est le cas, on termine la boucle sur l'indice i en incrémentant cet indice d'une unité lors de l'étape 175 et l'on passe au point suivant de la liste LI. Si tel n'est pas le cas, on exécute alors à nouveau la fonction CORRECT lors de l'étape 174, mais non pas avec la liste dynamique LI, mais avec la liste locale LI2. Ceci étant fait, on repasse alors à l'étape de fin de boucle 175. Après exécution de toute la boucle on termine par l'étape de fin 176.

Après l'étape 126 où on a exécuté la fonction CORRECT pour la liste LI d'interruption, ou après l'exécution de la fonction REKURS lors de l'étape 125 dans le procédé PROC, on incrémente ensuite la valeur du code de marque N d'une unité lors de l'étape 127, et on termine les boucles sur les ordonnées y lors de l'étape 128 et sur les abscisses x lors de l'étape 129. On parcourt ainsi tous les points de la carte contour 24, et on termine par l'étape de fin 130.

La figure 15e représente schématiquement l'arborescence de fonctionnement du procédé PROC et des fonctions REKURS et CORRECT. Comme on le voit, le procédé PROC appelle la fonction REKURS qui elle-même s'appelle une ou plusieurs fois, selon des niveaux de récursions k plus ou moins importants. De même, la fonction CORRECT appelle elle-même la fonction REKURS sur un niveau de récursions plus ou moins important, et s'appelle elle-même une ou plusieurs fois.

Il est à noter que dans certaines applications, une telle limitation du nombre de récursions peut ne pas être indispensable. Cela est en particulier le cas lorsque les marques sont de géométrie simple, par exemple formées uniquement de traits ou de lignes et que le système informatique utilisé est suffisamment puissant.

Sur l'exemple donné figure 4c, la carte séparation 25 comprend une marque dont le code de marque est égal à 0 (N=0), et une autre marque dont le code de marque est égal à1 (N=1). Sur la carte séparation 25, chaque marque est séparée des autres marques, puisque tous ses pixels contours sont identifiés.

Dans l'étape suivante, on remplit chacune des marques pour intégrer dans la liste dynamique 22 tous les pixels situés à l'intérieur de cette marque et former une carte, dite carte marques 26, représentée figure 4d. Il est à noter que cette étape de remplissage peut, dans certaines applications, être évitée dans la mesure où l'extension géométrique d'une marque dans l'image initiale 12 est entièrement déterminée par ses pixels contour et donc par la carte séparation 25, tel que représenté figure 4c. Cela est en particulier vrai lorsque les marques sont formées de caractères alphanumériques ou de traits ou lignes simples. Par contre, dans le cas de marques s'étendant en surface, il est préférable de réaliser l'étape de remplissage.

Il est également à noter, qu'à l'inverse, dans le cas de marques de géométrie simple, il n'est pas indispensable d'identifier préalablement les pixels contours pour créer la liste 22 et identifier les différents pixels de chacune des marques de l'image. On peut en effet directement créer la carte marques 26 à partir de l'image filtrée 23 comme décrit ci-après. Néanmoins, l'identification des pixels contours au préalable comme décrit ci-dessus permet en fait d'accélérer grandement le processus dans le cas de marques de géométrique quelconque, et notamment lorsque l'on met en présence simultanément des caractères alphanumériques et des marques de quadrillage, comme dans un imprimé traditionnel.

Pour réaliser cette étape de remplissage, on balaye la carte séparation 25, et on examine les pixels successivement colonne par colonne et ligne par ligne comme indiqué précédemment. On examine simultanément l'image filtrée 23 et la couleur de chacun de ses pixels. Au premier pixel contour d'une marque rencontrée dans la carte séparation 25, on considère que le code couleur de ce même pixel dans l'image filtrée 23 correspond au code couleur de la marque. Par exemple, on considère que ce code couleur est noir. On continue ensuite le balayage de la carte séparation 25. Au pixel suivant, la valeur du pixel dans la carte de séparation 25 est nécessairement soit la même (N) que le pixel précédent, qui est un pixel contour, soit la valeur -1. Dans ce deuxième cas, on examine alors la couleur de l'image filtrée 23 correspondant. Si cette couleur est la même que celle du pixel contour précédent, on modifie la valeur dans la carte pour attribuer à ce pixel le code marque N, puisqu'il s'agit bien d'un pixel à l'intérieur de la marque. Si au contraire, on constate que la couleur n'est pas la même que celle du pixel contour précédent, il s'agit d'un pixel extérieur à la marque, et on peut donc passer au pixel suivant. En balayant l'ensemble des pixels de la carte séparation 25, on remplit ainsi l'intérieur des marques et on obtient la carte marques 26. A chaque modification de valeur, on insère bien sûr les coordonnées du pixel correspondant dans la liste dynamique 22, dans la ligne correspondant au code marque attribué.

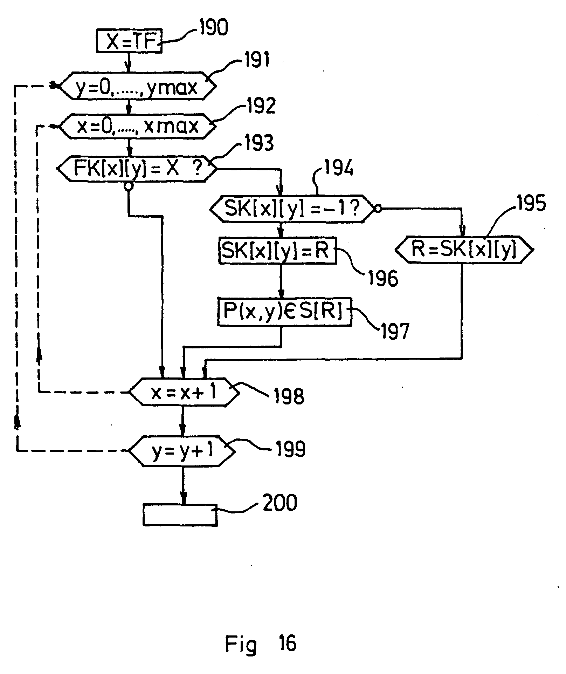

La figure 16 représente un exemple d'organigramme permettant de réaliser la carte marques 26 à partir de la carte séparation 25. Lors de l'étape initiale 190, on fixe une variable X à la valeur TF correspondant au code couleur de fond de l'image filtrée 23. Ce code couleur de fond peut être calculé préalablement ou saisi par l'utilisateur, comme indiqué précédemment.

Lors de l'étape 191 on ouvre une boucle sur les ordonnées y de 0 à ymax de l'image filtrée 23 puis, on ouvre lors de l'étape 192 une boucle sur les abscisses x, de 0 à xmax. Lors de l'étape 193, on examine si le code couleur de l'image initiale 23 au pixel courant de coordonnées (x, y) est différent de X ou non, c'est-à-dire si ce code couleur est bien différent du code couleur de fond ou non. Si tel n'est pas le cas, le pixel courant n'appartient pas à une marque et l'on passe directement aux étapes de fin de boucle 198 et 199 lors desquelles on incrémente l'abscisse et l'ordonnée d'une unité respectivement. Si tel est le cas, on examine lors de l'étape 194 si le code de la carte séparation 25 de ce pixel est égal ou non à -1. Si tel n'est pas le cas, il s'agit d'un pixel contour identifié dans la carte séparation 25, et on fixe alors la variable R à la valeur SK[x] [y] de ce pixel dans la carte séparation 25, et ce lors de l'étape 195. On passe ensuite aux étapes de fin de boucle 198 et 199. Si, lors de l'étape 194, on trouve que la valeur du code dans la carte séparation 25 et égal à -1, on modifie cette valeur pour la fixer à celle de R, lors de l'étape 196, puisque que l'on a ainsi identifié un pixel intérieur à la marque. Lors de l'étape 197, on ajoute le pixel P(x, y) dans la liste dynamique 22, dans la marque dont le code est R. On termine alors en exécutant les étapes de fin de boucle 198 et 199. De la sorte, on remplit l'intégralité des marques de la carte séparation 25. Une fois que l'on a terminé de parcourir tous les pixels, on termine par une étape de fin 200.

La création de la liste dynamique 22 a été décrite en référence à l'image initiale 12 et à une image filtrée 23 en noir et blanc. Il est aisé de comprendre que ce procédé est aussi applicable dans le cas d'une pluralité de couleurs distinctes obtenues après seuillage et filtrage. Par exemple, si l'image comprend quatre couleurs, un procédé semblable peut être réalisé.

De préférence, dans l'opération de seuillage et de filtrage permettant d'obtenir l'image filtrée 23, tous les pixels qui se jouxtent et dont le code couleur est différent du code de couleur de fond, se voient attribuer un même code couleur. Ainsi, une même marque est formée de tous les pixels contigus ayant le même code couleur.

Dans la liste dynamique 22, les différentes marques de l'image initiale 12 formées de pixels contigus sont donc identifiées et séparées les unes des autres. Ce traitement est effectué automatiquement pour toute image initiale 12 ouverte, c'est-à-dire chargée en mémoire vive, grâce au programme selon l'invention. Ce traitement peut être associé à la fonction d'édition d'image lancée lors de l'activation du programme selon l'invention lors de l'ouverture d'une image initiale 12.

Lors du lancement du programme selon l'invention et de l'ouverture d'une image initiale (c'est-à-dire lors de son chargement en mémoire vive), non seulement la fonction d'édition d'image est activée, mais également le programme de gestion de pointeur (souris) est associé à un programme permettant l'ouverture d'une ou plusieurs fenêtres de saisie 20, en superposition de l'image initiale 12, comme représenté en traits pointillés figure 2, et plus en détail figure 3. L'ouverture d'une telle fenêtre de saisie 20 peut être effectuée par l'utilisateur à l'aide du pointeur 21, par une manoeuvre de la souris 7 de type cliquer-glisser, depuis l'angle supérieur gauche de la fenêtre de saisie 20 jusqu'à l'angle inférieur droit de cette fenêtre de saisie 20. Une telle fonction d'ouverture de fenêtres de saisie à l'aide d'un pointeur est bien connue dans les programmes de multifenêtrage, de gestion de pointeur et d'édition d'images. La fonction d'ouverture de fenêtre de saisie est de préférence associée au bouton principal du dispositif du pointeur, notamment le bouton gauche de la souris 7.

Lors du lancement du programme selon l'invention, une fenêtre principale est ouverte comprenant de façon traditionnelle une ligne supérieure de menus et une barre d'outils pour incorporer une ou plusieurs icônes permettant de lancer des différents programmes d'application correspondant aux différentes fonctions à réaliser.

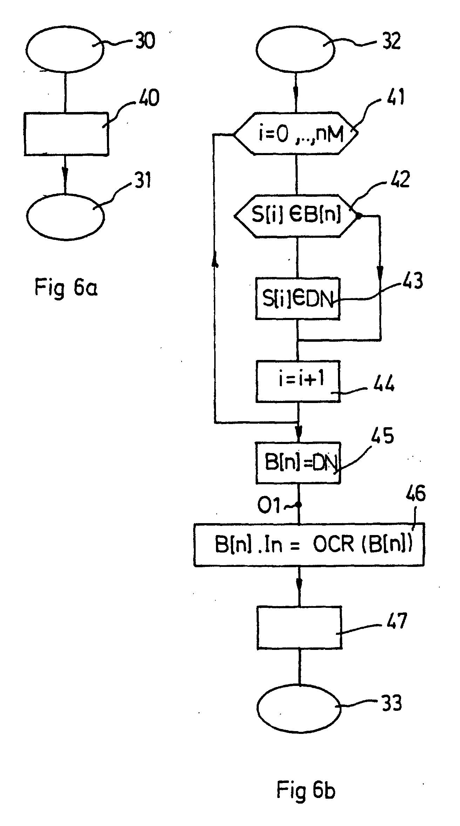

Lorsque l'utilisateur a défini une fenêtre de saisie, il peut définir la nature du contenu de cette fenêtre de saisie en actionnant un bouton secondaire de la souris 7 - notamment le bouton droit - qui ouvre un menu de configuration comme représenté figure 3. Sur cette figure, on a représenté deux exemples différents. Dans l'exemple le plus général, le menu de configuration 27 permet à l'utilisateur d'indiquer que la fenêtre de saisie 20 est destinée à réaliser l'une des opérations choisies parmi une Saisie OCR ; une Saisie/Edition Opérateur ; une Saisie/Edition Source et une Edition Application. Ces différentes opérations définissent la nature du traitement effectué sur la fenêtre de saisie 20 en vue de l'insertion de caractères saisis. Les organigrammes de fonctionnement de chacune de ces opérations sont décrits aux figures 6a, 6b pour la Saisie OCR ; 7a, 7b pour la Saisie/Edition Opérateur ; 8 pour la Saisie/Edition Source et 9a, 9b pour l'Edition Application.

Chacune de ces opérations comprend d'une part une fonction d'édition permettant de mettre en forme le contenu de la fenêtre de saisie 20 (organigramme des figures 6a, 7a et 9a) et, d'autre part, une fonction de saisie permettant d'incorporer des caractères saisis dans la fenêtre de saisie 20 (organigramme des figures 6b, 7b, 8, et 9b).

Dans les dessins et la description suivante, les définitions suivantes sont adoptées :

- B[i] : fenêtre de saisie 20 dont le numéro est i,
- B[i] [j] : marque de code j d'une fenêtre de saisie de numéro i,
- S[i]: marque de code i dans la liste dynamique 22, désignée S,
- T (x, y) : code couleur du pixel de coordonnées (x, y).

L'opération Saisie OCR permet de reconnaître des caractères dans l'image initiale 12 grâce à un programme de reconnaissance de caractères et de les utiliser en entrée d'un programme de traitement numérique de données.

La fonction édition, comprend dans tous les cas, une étape de départ 30, et une étape de fin 31. De même, chaque fonction de saisie comprend une étape de départ 32, et une étape de fin 33. Ces étapes de départ et de fin sont déclenchées automatiquement par le programme selon l'invention, selon l'état dans lequel il se trouve, ou suite à une commande de l'utilisateur.

Dans le cadre de l'opération Saisie OCR, la seule étape réalisée dans la fonction d'édition est une étape 40 lors de laquelle on dessine la partie de l'image initiale 12 correspondant à la fenêtre de saisie 20. Dans cette opération Saisie OCR, il n'y a pas, à ce stade, de modifications de l'image dans la fenêtre de saisie 20.

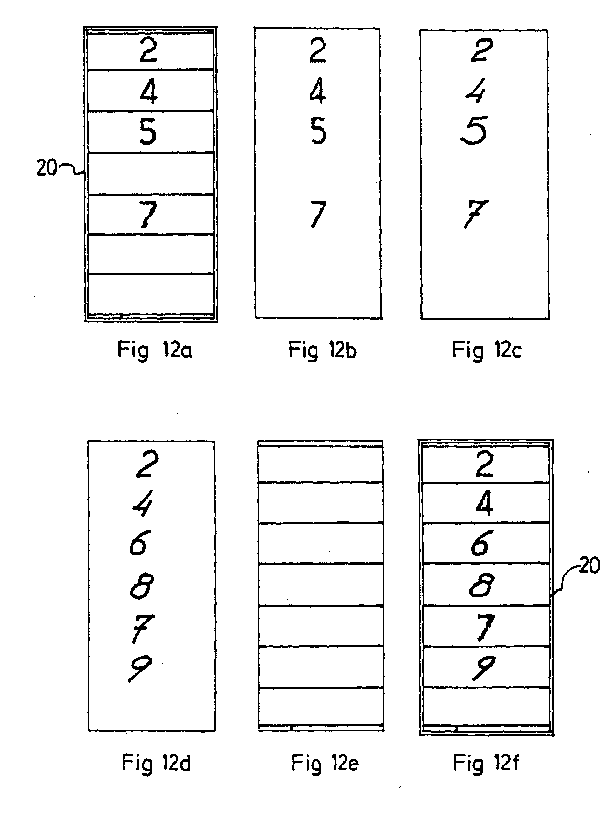

La fonction de saisie correspondant à l'opération Saisie OCR consiste à identifier des caractères initiaux à l'intérieur de la fenêtre de saisie 20, et à créer un nouveau dessin de cette fenêtre de saisie 20 incorporant uniquement ces caractères initiaux, puis à effectuer un programme de reconnaissance de caractères sur ces caractères initiaux préalablement isolés. Ces étapes sont représentées figures 12a à 12c. Sur la figure 12a, on a représenté la fenêtre de saisie 20 à l'état d'origine. A la figure 12b, on a représenté les caractères initiaux identifiés dans la fenêtre de saisie 20. Pour obtenir ce résultat, il faut distinguer dans la fenêtre de saisie 20 les caractères initiaux entièrement circonscrits dans la fenêtre de saisie 20, des portions invariables graphiques formées des marques qui s'étendent au-delà de cette fenêtre de saisie 20. Les portions invariables graphiques M1 peuvent comprendre les marques dont l'extension est supérieure à une première valeur prédéterminée et/ou inférieure à une deuxième valeur prédéterminée.

Pour ce faire, comme représenté figure 6b, on effectue une boucle lors de l'étape 41 sur les différentes marques de 0 à nM de la liste dynamique 22. Pour chaque marque, repérée S[i], de cette liste, on examine lors de l'étape 42 si elle est entièrement comprise dans la fenêtre de saisie 20 ou non. Si tel est le cas, on enregistre cette marque S[i] dans le nouveau dessin DN de la fenêtre de saisie B[n], lors d'une étape 43. Si tel n'est pas le cas, on passe directement à l'étape 44 de fin de boucle lors de laquelle l'indice i de la boucle est incrémenté d'une unité. A la fin de cette boucle, on obtient donc un nouveau dessin de la fenêtre de saisie 20 comme représenté figure 12b, qui ne comprend que les caractères qui sont compris à l'intérieur de la fenêtre de saisie 20.

Pour réaliser l'étape 42, on examine, pour chaque marque, l'ensemble de ses pixels comme représenté figure 11. Si tous les pixels de la marque S[i] ont leurs coordonnées (x, y) qui satisfont les conditions x1<x<x2 et y1<y<y2, (x1, y1) étant les coordonnées du pixel supérieur gauche de la fenêtre de saisie 20, et (x2, y2) étant les coordonnées du pixel inférieur droit de la fenêtre de saisie 20, on sait que la marque S[i] est un caractère initial tel que le caractère nM2 représenté figure 11. Comme on le voit en effet, tout pixel C ou D de cette marque nM2 est compris à l'intérieur de la fenêtre de saisie 20. Par contre, si une marque nM1 présente un pixel A dont les coordonnées (xA, yA) sont comprises dans celles de la fenêtre de saisie 20, mais également un pixel B dont les coordonnées (xB, yB) sont situées en dehors de la fenêtre de saisie 20, alors cette marque nM1 constitue une portion invariable graphique M1 est n'a pas à être considérée.

Pour effectuer cette étape 42, on parcourt donc une boucle sur tous les pixels de chaque marque S[i], et on examine si le pixel à ses coordonnées comprises dans celles de la fenêtre de saisie 20 comme indiqué précédemment. A chaque pixel dont les coordonnées sont comprises dans la fenêtre de saisie 20, on peut placer un premier compteur, dont la valeur initiale est à 0, à la valeur 1. Si on trouve ensuite dans la même marque un pixel en dehors de la fenêtre de saisie 20, on place un deuxième compteur, dont la valeur initiale est également égale à 0, à la valeur 1. Pour que la marque soit considérée comme un caractère initial, la valeur du premier compteur doit être égale à 1, tandis que celle du deuxième compteur est égale à 0. Pour tous les autres cas, on ignore la marque S[i], qui n'est pas en caractère initial.

Lors de l'étape subséquente 45, on redéfinit une fenêtre (mémorisée mais non affichée) semblable à la fenêtre de saisie 20, mais uniquement constituée du nouveau dessin DN précédemment obtenu. On applique alors l'étape 46 le programme de reconnaissance de caractères sur ce dessin en effectuant, sur cette nouvelle fenêtre, la fonction de saisie représentée par B[i]. In qui, dans le cas de l'opération Saisie OCR, correspond à une fonction OCR (B[n]) de reconnaissance de caractères.

A titre de programme de reconnaissance de caractères, on peut utiliser tout programme qui reconnaît des caractères à partir d'une portion d'image pixélisée telle que représentée figure 12b. De nombreux programmes de reconnaissance de caractères sont connus et peuvent être utilisés.

Ce programme de reconnaissance de caractères, dans l'exemple de la figure 12b, permet de reconnaître les caractères alphanumériques ASCII, individuellement sous forme de pixels, et de leur attribuer le code ASCII correspondant préenregistré comme représenté 12c. Les valeurs ainsi obtenues peuvent être utilisées directement en entrée d'un programme de traitement numérique tel qu'un tableur, un traitement de texte ou autre, comme représenté par l'étape 47 de la figure 6b.

L'opération Saisie/Edition Opérateur permet une saisie manuelle de données par l'opérateur, par exemple à l'aide d'un clavier, permettant de prendre en compte ces données lors d'un programme de traitement de données numériques tel qu'un tableur, un traitement de texte ... ou de les introduire directement dans la fenêtre de saisie à un endroit prédéterminé qu'il peut choisir.

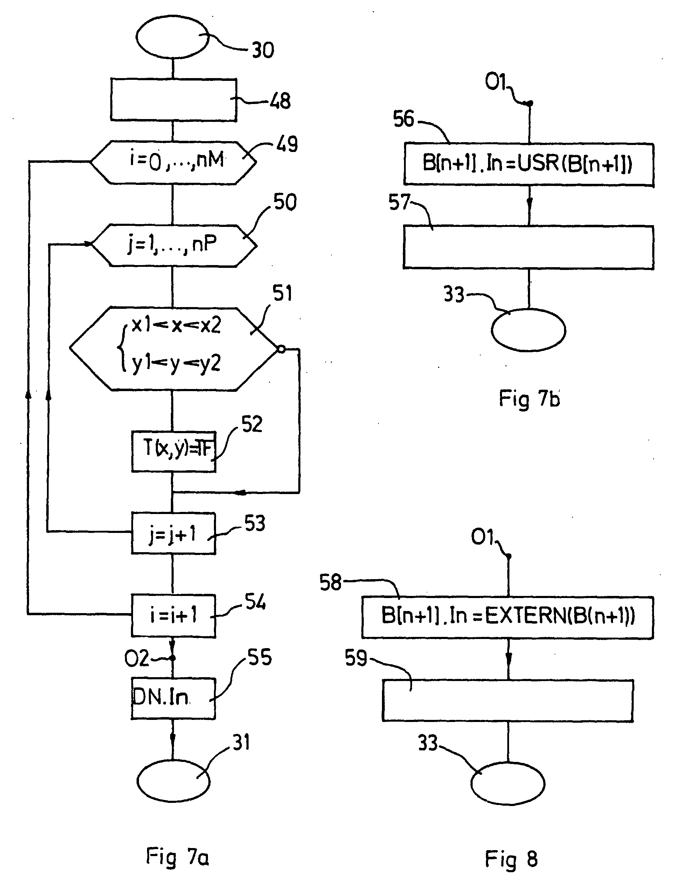

Dans le cadre de cette opération, la fonction d'édition doit préalablement d'une part déterminer quels sont les caractères initiaux dans la fenêtre de saisie 20, et d'autre part effacer ces caractères initiaux afin d'éviter tout chevauchement ultérieur intempestif des caractères saisis et des caractères initiaux. C'est ce qui est représenté dans l'organigramme figure 7a. Après l'étape de départ 30, l'étape de dessin 48 de la fenêtre de saisie 20, on ouvre une boucle lors de l'étape 49 sur les différentes marques de la liste dynamique 22, dont le code varie de 0 à nM.

Lors de l'étape subséquente 50, on ouvre une boucle pour examiner les différents pixels, numérotés de 1 à nP, de chacune des marques. On examine lors de l'étape 51 si les coordonnées (x, y) du pixel sont comprises dans celles de la fenêtre de saisie 20 comme indiqué précédemment. Si tel est le cas, on efface le pixel en plaçant son code couleur à TF, code de la couleur de fond (égal à 0 dans l'exemple représenté), c'est-à-dire en plaçant la valeur TF dans la deuxième colonne de la liste dynamique 22 représentée figure 5, soit T(x, y)=TF. Cette étape 52 n'est pas effectuée si les coordonnées du pixel sont situées en dehors de celles de la fenêtre de saisie 20. On effectue ensuite les étapes de fin de boucle 53 et 54 lors desquelles on incrémente les indices de boucle d'une unité, et on redessine lors de l'étape 55 une nouvelle fenêtre dans laquelle tous les caractères initiaux ont été ainsi effacés.

Pour la fonction de saisie de cette opération Saisie/Edition Opérateur, comme représenté figure 7b, on repart du point O1 de l'organigramme de la figure 6b après l'étape 45, et on saisit une nouvelle fenêtre B[n+1] dans laquelle on insère lors de l'étape 56, les données saisies par l'opérateur, par la fonction USR(B[n+1]). Lors de l'étape 57 suivante, on utilise les données ainsi saisies dans un programme de traitement numérique de données, tel qu'un tableur ou un traitement de texte.

L'opération Saisie/Edition Source permet d'obtenir des caractères à saisir à partir d'un programme de traitement numérique de données tel qu'un tableur ou un traitement de texte. La fonction d'édition de cette opération est identique à celle de l'opération Saisie/Edition Opérateur précédemment décrite, c'est-à-dire que l'on efface au préalable tous les caractères initiaux incorporés dans la fenêtre de saisie 20. On reprend alors l'organigramme de la fonction de saisie au point O1 représenté figure 6b pour définir une nouvelle fenêtre B [n+1] dans laquelle on saisit les valeurs obtenues en sortie par le programme de traitement numérique de données représenté par la fonction EXTERN(B(n+1)), lors de l'étape 58 de la figure 8. Lors de l'étape 59 suivante, on effectue une nouvelle étape de traitement numérique de données à l'aide d'un tableur ou d'un traitement de texte, pour obtenir les caractères saisis à insérer en final dans la fenêtre de saisie 20.

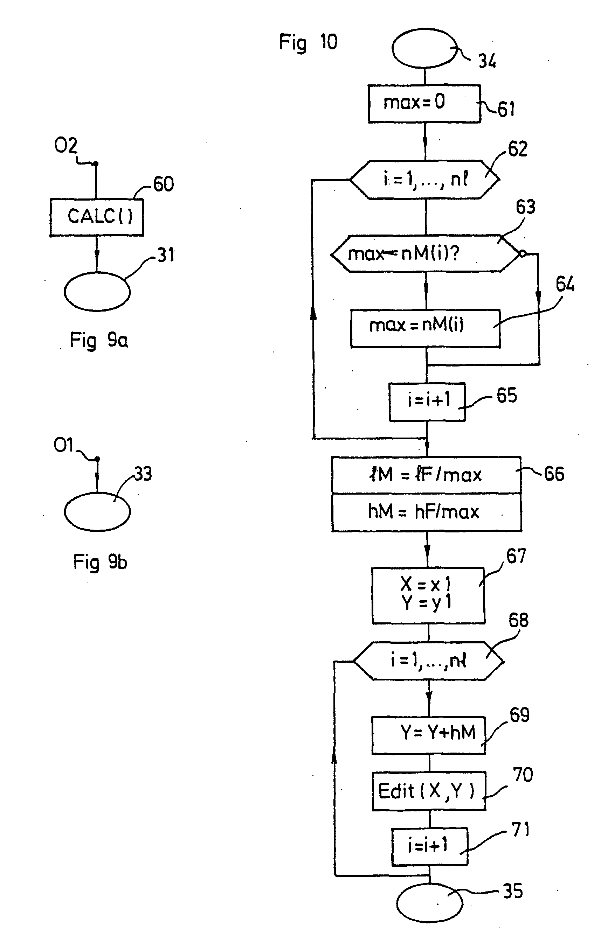

L'opération Edition Application permet à l'opérateur d'éditer, d'afficher et d'introduire à l'endroit choisi dans la fenêtre de saisie 20 les résultats d'un calcul effectué par un programme de traitement numérique de données tel qu'un calcul de montant partiel par article ou un calcul de taxes sur la valeur ajoutée ... et le dessiner dans l'image de cette fenêtre. Pour la fonction d'édition de cette opération (figure 9a), on efface tout d'abord tous les caractères initiaux de la fenêtre, c'est-à-dire que l'on repart du point O2 de l'organigramme de la figure 7a avant l'étape 55 de réalisation du nouveau dessin DN. A partir de ce point, on dessine dans la fenêtre le résultat de calcul du programme de traitement numérique, lors de l'étape 60, puis on termine la fonction d'édition. Dans cette opération, aucune saisie particulière n'est faite de sorte que la fonction de saisie (figure 9b) se résume, à partir du point O1 de l'organigramme de la figure 6b, à l'étape de fin 33.

La figure 12d représente un exemple de fenêtre obtenue par un tableur lors d'une Saisie/Edition Source. Le programme de tableur a en effet modifié le caractère initial "5" en "6", caractère saisi et a permis de rajouter les caractères saisis "8" et "9". Dans l'étape suivante figure 12e, la fonction d'édition a effacé tous les caractères initiaux de la fenêtre de saisie 20 représentée figure 12a. En combinant les valeurs de la figure 12d avec le dessin de la figure 12e, on réalise l'étape 55 permettant d'obtenir en final le nouveau dessin DN représenté figure 12f. Comme on le voit, les caractères initiaux, bien qu'ayant été effacés du dessin, peuvent être réintégrés sous leur forme initiale dans la fenêtre. En effet, leurs pixels sont encore mémorisés dans la liste dynamique 22.

Dans la deuxième variante représentée figure 3, le menu de configuration est préprogrammé pour incorporer les différentes opérations précédemment décrites selon une nature prédéfinie de la fenêtre de saisie 20. Par exemple, pour un bordereau de soumission à un appel d'offre de marché public, on sait que les fenêtres de saisie peuvent correspondre à un nombre limité de données à saisir, notamment choisies parmi la désignation des articles, le nombre des articles, la quantité des articles, le prix unitaire des articles, le montant par article et le calcul du total (sous total, taxe sur la valeur ajoutée et total toutes taxes comprises).

Dans ces conditions, le menu 28 peut incorporer toutes les opérations nécessaire à la saisie de ces données. Par exemple, une fenêtre de saisie déclarée comme de nature correspondant à une "désignation" sera une opération Saisie/Edition Opérateur. Une fenêtre de saisie déclarée comme correspondant à une colonne "quantités" comprendra une opération Saisie OCR, une opération Saisie/Edition Opérateur, voire une opération Saisie/Edition Source si les données sont issues d'un programme précédent. Une fenêtre de saisie déclarée en tant que "montant par article" comprendra une opération Saisie/Edition Source ...

Bien évidemment, différentes opérations du menu de configuration 27 principal peuvent être combinées dans une même fenêtre de saisie 20.

Selon l'invention, lors du dessin de la nouvelle fenêtre (étape 55), le programme est adapté pour calculer automatiquement la dimension des caractères saisis et leur remplacement approprié, de façon à ne pas chevaucher les portions invariables graphiques. Cela est réalisé selon l'organigramme représenté figure 10 qui comprend une étape de départ 34, une étape 61 d'initialisation d'un paramètre max égal à 0, et une étape 62 d'ouverture d'une boucle lors de laquelle on parcourt les différentes lignes numérotées de 1 à n$\ell$ de la fenêtre de saisie 20. Le nombre de lignes nl peut être soit lui-même saisi par l'opérateur, soit calculé par le programme, par exemple en fonction du nombre de l'espacement des caractères initiaux M1 de la fenêtre de saisie 20, après application du programme de reconnaissance de caractères, et/ou en fonction du nombre de portions invariables graphiques présentes dans la fenêtre de saisie 20 comme déterminé dans l'étape 42 précédemment décrite.

Pour chaque ligne, on examine si le paramètre max est ou non inférieur au nombre nM(i) de caractères initiaux appartenant à cette ligne, lors de l'étape 63. Si tel est le cas, on fixe la valeur du paramètre max à celle nM(i) lors de l'étape 64. Si tel n'est pas le cas, on saute cette étape 64 pour terminer la boucle lors de l'étape 65. A la fin de cette boucle, la valeur du paramètre max est donc égale au nombre de caractères initiaux de la plus longue ligne de la fenêtre de saisie 20.

Lors de l'étape 66, on détermine la largeur $\ell$M et la hauteur hM de chacun des caractères saisis par les formules :

$$\ell M = \ell F/max,$$

$$hM = hF/n\ell,$$

ou $\ell F$ est la largeur de la fenêtre de saisie 20, et hF est la hauteur de la fenêtre de saisie 20, en nombre de pixels.

On détermine ensuite l'emplacement de coordonnées (X, Y) où les caractères saisis doivent être dessinés. On initialise tout d'abord, lors de l'étape 67, X=x1 et Y=y1 aux coordonnées du pixel supérieur gauche de la fenêtre de saisie 20. On ouvre ensuite une boucle sur le nombre de lignes numérotées de 1 à $n\ell$ lors de l'étape 68 puis, pour chaque ligne, on incrémente Y de la valeur de hM lors de l'étape 69. On édite ensuite les caractères saisis sur la ligne considérée lors de l'étape 70 d'édition en commençant à l'emplacement de coordonnées (X, Y). L'étape 71 termine la boucle et on dessine ainsi toutes les lignes à saisir. Le procédé est terminé par une étape de fin 35.

Ce calcul de dimensions et d'emplacements automatiques est réalisé à chaque fois que des caractères saisis sont dessinés. Tel est le cas en particulier lors de l'étape 55 de l'opération Saisie/Edition Opérateur précédemment mentionnée.

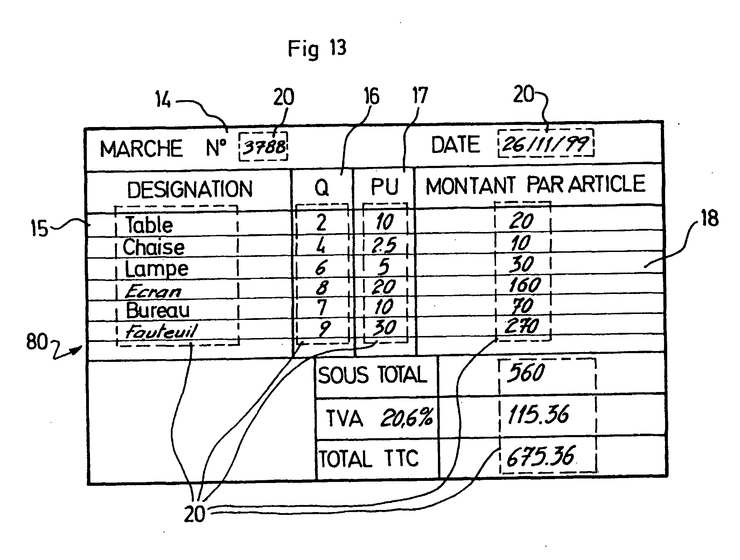

La figure 13 représente un exemple d'imprimés rempli selon l'invention. Sur cette figure, les caractères saisis sont mentionnés en italiques, de façon à les distinguer des caractères initiaux représentés figure 2. Bien sûr, une telle distinction n'est pas obligatoire. Elle peut néanmoins aisément être réalisée dès lors que les caractères saisis sont édités par le programme selon l'invention grâce à toute fonction d'édition de caractères, notamment la classe édition de texte de la bibliothèque MICROSOFT ® MFC. On obtient ainsi une image remplie 80 dans laquelle les caractères saisis sont automatiquement positionnés avec les bonnes dimensions, dans les zones adéquates, sans risque de chevauchement ou de suppression des portions invariables graphiques. Les différentes fenêtres de saisie 20 ouvertes pour remplir cette image sont figurées en traits pointillés. Cette image remplie 80 peut alors être soit directement imprimée, soit mémorisée sur un support d'enregistrement, soit transmise sur un réseau informatique, par exemple sous forme cryptée.

L'invention permet ainsi une très grande souplesse d'utilisation pour le remplissage d'imprimés de toute nature de façon extrêmement conviviale et rapide. En particulier, il est à noter qu'elle permet soit le remplissage de formulaires vierges sans aucun calcul par une simple édition manuelle, ou le remplissage d'imprimés plus complexes incorporant des calculs qui peuvent être préprogrammés par un ou plusieurs programme(s) de tableur ou de traitement de texte, comme dans le cas de l'exemple représenté d'un bordereau de soumission à un appel d'offre de marché public.

L'invention peut faire l'objet de très nombreuses variantes par rapport aux modes de réalisation représentés et décrits. Les fonctions, opérations, et étapes décrites ci-dessus peuvent être réalisées par programmation, par exemple en langage C++, sous environnement WINDOWS ®. Néanmoins, d'autres programmes de multifenêtrage et de gestion de pointeur peuvent être utilisés que ceux commercialisés par la société MICROSOFT CORPORATION. Egalement, l'invention serait applicable à d'autres formats d'images que des images pixélisées, par exemple des images sous forme vectorielle, en adoptant les algorithmes correspondants de façon à permettre l'identification des portions invariables graphiques.

## Revendications

1. Dispositif informatique pour le remplissage automatique par ordinateur d'imprimés comprenant des marques - notamment pouvant comprendre des cadres, bordures, lignes, colonnes, quadrillages, repères, signes, graphiques, caractères ou signes alphanumériques, ... - et dans lesquels des caractères doivent être saisis, ce dispositif comprenant des moyens informatiques de traitement numérique adaptés et programmés pour :

   - permettre la mémorisation et l'affichage sur un écran (5) d'affichage électronique d'une image, dite image initiale (12), représentant un imprimé à remplir,
   - identifier automatiquement dans l'image initiale (12) des portions correspondant à des marques,
   - permettre l'ouverture dans cette image initiale (12) d'au moins une fenêtre, dite fenêtre de saisie (20), couvrant une zone partielle de l'imprimé dans laquelle au moins un caractère doit être saisi,
   - puis identifier automatiquement, dans chaque fenêtre de saisie (20), chacune des portions de l'image initiale, dites portions invariables graphiques (M1), correspondant à des marques s'étendant dans la fenêtre de saisie (20), mais présentant au moins une dimension supérieure à une première valeur prédéterminée et/ou inférieure à une deuxième valeur prédéterminée.

2. Dispositif selon la revendication 1, **caractérisé en ce que** les portions invariables graphiques (M1) correspondent à des marques s'étendant au-delà d'au moins une dimension définie par rapport à au moins une dimension de la fenêtre de saisie (20).

3. Dispositif selon la revendication 2, **caractérisé en ce que** les portions invariables graphiques (M1) correspondent à des marques s'étendant au-delà des limites de la fenêtre de saisie (20).

4. Dispositif selon l'une des revendications 1 à 3, **caractérisé en ce que** les moyens informatiques sont adaptés et programmés pour :

   - permettre l'activation de moyens d'édition de caractères adaptés pour permettre la saisie d'au moins un caractère, dit caractère saisi, et aptes à le placer automatiquement en un point prédéterminé d'au moins une fenêtre de saisie (20) de l'image initiale (12),
   - modifier automatiquement chaque portion de l'image initiale (12) dans la fenêtre de saisie (20) couverte par au moins un caractère saisi, à l'exception des portions invariables graphiques (M1) laissées inchangées, et ainsi générer une image, dite image remplie (80), de l'imprimé.

5. Dispositif selon l'une des revendications 1 à 4, **caractérisé en ce que** les moyens informatiques sont adaptés pour identifier automatiquement les marques comme portions de l'image initiale (12) ayant une couleur distincte d'une couleur prédéterminée, dite couleur de fond.

6. Dispositif selon l'une des revendications 1 à 5, **caractérisé en ce que** les moyens informatiques sont adaptés pour identifier automatiquement dans chaque fenêtre de saisie (20), chacune des portions de l'image initiale (12), dite caractère initial (M2), correspondant à une marque s'étendant entièrement dans la fenêtre de saisie (20) et qui n'est pas identifiée comme une portion invariable graphique (M1).

7. Dispositif selon la revendication 6, **caractérisé en ce que** les moyens informatiques sont adaptés et programmés pour modifier automatiquement chaque portion de l'image initiale (12) dans la fenêtre de saisie (20) en éliminant les portions invariables graphiques (M1) et en conservant les caractères initiaux (M2).

8. Dispositif selon la revendication 4 et l'une des revendications 6 ou 7, **caractérisé en ce que** les moyens informatiques sont adaptés pour avant de modifier l'image de la fenêtre de saisie (20) pour réaliser l'image remplie (80), effacer automatiquement dans la fenêtre de saisie (20) au moins chacun des caractères initiaux (M2) qui serait au moins partiellement couvert par un caractère saisi.

9. Dispositif selon l'une des revendications 7 ou 8, **caractérisé en ce que** les moyens informatiques comprennent un programme de reconnaissance de caractères apte à attribuer à chaque caractère initial (M2) selon sa forme, un code d'identification mémorisé de l'une des formes d'objets connues d'une famille de formes d'objets connues prédéterminées, et **en ce que** les moyens informatiques sont adaptés et programmés pour exécuter ce programme de reconnaissance de caractères pour au moins les caractères initiaux (M2) identifiés dans au moins une fenêtre de saisie (20).

10. Dispositif selon d'une des revendications 1 à 9, **caractérisé en ce que** les moyens informatiques comportent au moins un programme de traitement numérique de données choisi parmi un tableur, un programme de traitement de texte, et un programme de traitement numérique d'images, configuré selon des conditions prédéterminées relatives à l'imprimé à remplir, des moyens pour permettre à l'utilisateur d'associer chaque fenêtre de saisie à une entrée ou une sortie d'un programme de traitement numérique de données, et **en ce que** les moyens informatiques sont adaptés pour définir en tant que caractère(s) saisi(s) des données générées par ledit programme de traitement numérique de données.

11. Dispositif selon l'une des revendications 1 à 10, **caractérisé en ce que** l'image initiale (12) est une image numérique pixélisée, et **en ce que** les moyens informatiques comprennent des moyens d'analyse de l'image initiale (12) adaptés pour générer automatiquement une liste dynamique (22) de toutes les marques de cette image initiale (12), chaque marque de cette liste (22) étant formée d'un et d'un seul ensemble de pixels contigus repérés par leurs coordonnées et ayant un code de couleur satisfaisant à au moins une condition prédéterminée.

12. Dispositif selon la revendication 11, **caractérisé en ce que** les moyens d'analyse de l'image initiale (12) comportent des moyens de seuillage et/ou filtrage adaptés pour générer automatiquement, à partir de l'image initiale (12), une image (23) dont les couleurs appartiennent à un groupe d'un nombre prédéterminé de couleurs, dont une couleur correspond à la couleur de fond de l'image, et **en ce que** chaque marque de la liste (22) est un ensemble de pixels contigus ayant un code de couleur distinct du code de la couleur de fond.

13. Dispositif selon l'une des revendications 11 ou 12, **caractérisé en ce que** chaque marque de la liste (22) est formée d'un ensemble de pixels contigus ayant le même code de couleur.

14. Dispositif selon d'une des revendications 11 à 13, **caractérisé en ce que** les moyens informatiques sont adaptés pour comparer automatiquement les coordonnées des pixels de chaque marque de la liste (22), à celles des pixels d'une fenêtre de saisie (20), pour déterminer automatiquement si l'un d'entre eux appartient à cette fenêtre de saisie (20), et, si tel est le cas, pour déterminer automatiquement s'il existe des pixels de cette même marque dont les coordonnées sont au-delà de limites prédéterminées - notamment en dehors de celles de la fenêtre de saisie (20) -, de façon à identifier cette marque en tant que portion invariable graphique (M1).

15. Dispositif selon la revendication 14, **caractérisé en ce que** les moyens informatiques sont adaptés pour comparer automatiquement les coordonnées des pixels de chaque marque de la liste (22) à celles des pixels d'une fenêtre de saisie (20), pour déterminer automatiquement si l'un d'entre eux appartient à cette fenêtre de saisie (20), et, si tel est le cas, pour déterminer automatiquement si tous les pixels de cette même marque ont leurs coordonnées incluses des limites prédéterminées - notamment dans celles de la fenêtre de saisie (20) -, de façon à identifier cette marque en tant que caractère initial (M2).

16. Dispositif selon les revendications 14 et 15, **caractérisé en ce que** les moyens informatiques sont adaptés pour examiner automatiquement successivement chaque marque de la liste (22), et,

    - si elle est identifiée en tant que portion invariable graphique (M1), ne pas appliquer le programme de reconnaissance de caractères sur cette marque,
    - si elle est identifiée en tant que caractère initial (M2), appliquer automatiquement un programme de reconnaissance de caractères sur cette marque.

17. Dispositif selon l'une des revendications 11 à 16, **caractérisé en ce que** les moyens informatiques sont adaptés pour conserver ou incorporer automatiquement dans l'image remplie (80) les pixels des marques de la liste (22) correspondant aux portions invariables graphiques (M1) et aux caractères initiaux (M2) qui n'ont pas fait l'objet d'une saisie.

18. Dispositif selon l'une des revendications 1 à 17, **caractérisé en ce que** les moyens informatiques sont adaptés pour calculer automatiquement les dimensions de chaque caractère saisi pour que celles-ci soient compatibles avec les portions invariables graphiques (M1) et avec la fenêtre de saisie (20), et que le caractère saisi soit placé correctement dans l'image remplie (80).

19. Dispositif selon l'une des revendications 1 à 18, **caractérisé en ce que** les moyens informatiques sont adaptés et programmés pour activer des moyens d'édition de caractères sur commande d'un programme de pointeur déplacé par l'utilisateur en un point prédéterminé d'une fenêtre de saisie (20) de l'image initiale à partir duquel au moins un caractère saisi doit être placé.

20. Dispositif selon l'une des revendications 1 à 19, **caractérisé en ce que** les moyens informatiques sont adaptés et programmés pour permettre l'ouverture de chaque fenêtre de saisie (20) par l'utilisateur à l'aide d'un programme de pointeur et d'un programme de multifenêtrage.

21. Dispositif selon l'une des revendications 1 à 20, **caractérisé en ce que** les moyens informatiques sont adaptés pour permettre la reproduction de l'image remplie (80) sous forme stable - notamment par impression, ou mémorisation sur un support d'enregistrement à écriture unique -.

22. Dans un dispositif informatique comprenant des moyens informatiques de traitement numérique et au moins un écran (5) d'affichage électronique, un procédé de remplissage automatique par ordinateur d'imprimés comprenant des marques notamment pouvant comprendre des cadres, bordures, lignes, colonnes, quadrillages, repères, signes, graphiques, caractères ou signes alphanumériques, ... et dans lesquels des caractères doivent être saisis, ce procédé comprenant les étapes suivantes :

    - afficher sur un écran d'affichage (5) électronique une image, dite image initiale (12), représentant un imprimé à remplir,
    - identifier automatiquement dans l'image initiale (12) des portions correspondant à des marques,
    - ouvrir, dans cette image initiale (12), au moins une fenêtre, dite fenêtre de saisi (20), couvrant une zone partielle de l'imprimé dans laquelle au moins un caractère doit être saisi,
    - puis identifier automatiquement, dans chaque fenêtre de saisie (20), chacune des portions de l'image initiale, dites portions invariables graphiques (M1), correspondant à des marques s'étendant dans la fenêtre de saisie (20) mais présentant au moins une dimension supérieure à une première valeur prédéterminée et/ou inférieure à une deuxième valeur prédéterminée.

23. Procédé selon la revendication 22, **caractérisé en ce que** les portions invariables graphiques (M1) correspondent à des marques s'étendant au-delà d'au moins une dimension définie par rapport à au moins une dimension de la fenêtre de saisie (20).

24. Procédé selon la revendication 23, **caractérisé en ce que** les portions invariables graphiques (M1) correspondent à des marques s'étendant au-delà des limites de la fenêtre de saisie (20).

25. Procédé selon l'une des revendications 22 à 24, **caractérisé par** les étapes suivantes :

- activer des moyens d'édition de caractères adaptés pour permettre la saisie d'au moins un caractère, dit caractère saisi, et aptes à le placer en un point prédéterminé d'au moins une fenêtre de saisie (20) de l'image initiale (12),
- modifier automatiquement chaque portion de l'image initiale (12) dans la fenêtre de saisie (20) couverte par au moins un caractère saisi, à l'exception des portions invariables graphiques (M1) laissées inchangées, et ainsi générer une image, dite image remplie (80), de l'imprimé.

26. Procédé selon l'une des revendications 22 à 25, **caractérisé par le fait que** l'on identifie automatiquement les marques de l'image initiale en tant que portion de l'image initiale (12) ayant une couleur distincte d'une couleur prédéterminée, dite de couleur de fond.

27. Procédé selon l'une des revendications 22 à 26, **caractérisé par** l'étape suivante :

- identifier automatiquement dans chaque fenêtre de saisie (20), chacune des portions de l'image initiale (12), dite caractère initial (M2), correspondant à une marque s'étendant entièrement dans la fenêtre de saisie (20), et qui n'est pas identifiée comme une portion invariable graphique (M1).

28. Procédé selon la revendication 27, **caractérisé par** une étape consistant à modifier automatiquement chaque portion de l'image initiale (12) dans la fenêtre de saisie (20) en éliminant les portions invariables graphiques (M1) et en conservant les caractères initiaux (M2).

29. Procédé selon la revendication 25 et l'une des revendications 27 ou 28, **caractérisé par** une étape consistant, avant de modifier l'image initiale (12) dans la fenêtre de saisie (20) pour réaliser l'image remplie (80), à effacer dans la fenêtre de saisie (20) au moins chacun des caractères initiaux (M2) qui serait au moins partiellement couvert par un caractère saisi.

30. Procédé selon l'une des revendications 26 à 29, **caractérisé par** une étape de reconnaissance de caractères apte à attribuer à chaque caractère initial (M2) selon sa forme, un code d'identification mémorisé de l'une des formes d'objets connues d'une famille de formes d'objets connues prédéterminées, et par le fait que cette étape de reconnaissance de caractères est exécutée pour au moins les caractères initiaux (M2) identifiés dans au moins une fenêtre de saisie (20).

31. Procédé selon l'une des revendications 22 à 30, **caractérisé par** les étapes suivantes :

- traiter des données par un programme choisi parmi un tableur, un programme de traitement de texte, et un programme de traitement numérique d'images, configuré selon des conditions prédéterminées relatives à l'imprimé à remplir,
- associer chaque fenêtre de saisie (20) à une entrée et/ou à une sortie d'un programme de traitement numérique de données,
- définir en tant que caractère(s) saisi(s) des données générées par ledit programme de traitement numérique de données.

32. Procédé selon l'une des revendications 22 à 31, **caractérisé par** les étapes suivantes :

- mémoriser l'image initiale (12) en tant qu'image numérique pixélisée,
- analyser l'image initiale (12) et générer automatiquement une liste dynamique (22) de toutes les marques de cette image initiale (12), chaque marque de cette liste (22) étant formée d'un et d'un seul ensemble de pixels contigus repérés par leurs coordonnées et ayant un code de couleur satisfaisant à au moins une condition prédéterminée.

33. Procédé selon la revendication 32, **caractérisé par** les étapes suivantes :

- seuiller et/ou filtrer l'image initiale (12) pour générer automatiquement, à partir de cette image initiale (12), une image (23) dont les couleurs appartiennent à un groupe d'un nombre prédéterminé de couleurs, dont une couleur correspond à la couleur de fond de l'image,
- enregistrer chaque marque de la liste (22) comme un ensemble de pixels contigus ayant un code de couleur distinct du code de la couleur de fond.

34. Procédé selon l'une des revendications 32 ou 33, **caractérisé en ce que** chaque marque de la liste (22) est formée d'un ensemble de pixels contigus ayant le même code de couleur.

35. Procédé selon d'une des revendications 32 à 34, **caractérisé par** les étapes suivantes :

- comparer automatiquement les coordonnées des pixels de chaque marque de la liste (22), à celles des pixels d'une fenêtre de saisie (20),

- déterminer automatiquement si l'un d'entre eux appartient à cette fenêtre de saisie (20),
- et, si tel est le cas, déterminer automatiquement s'il existe des pixels de cette même marque dont les coordonnées sont au-delà de limites prédéterminées - notamment en dehors de celles de la fenêtre de saisie (20) -, de façon à identifier cette marque en tant que portion invariable graphique (M1).

36. Procédé selon d'une des revendications 32 à 35, **caractérisé par** les étapes suivantes :

- comparer automatiquement les coordonnées des pixels de chaque marque de la liste, à celles des pixels d'une fenêtre de saisie (20),
- déterminer automatiquement si l'un d'entre eux appartient à cette fenêtre de saisie (20),
- et, si tel est le cas, déterminer automatiquement si tous les pixels de cette même marque ont leurs coordonnées incluses dans des limites prédéterminées
- notamment dans celles de la fenêtre de saisie (20) -, de façon à identifier cette marque en tant que caractère initial (M2).

37. Procédé selon les revendications 35 et 36, **caractérisé par** les étapes suivantes :

- examiner automatiquement successivement chaque marque de la liste (22), et,
- si elle est identifiée en tant que portion invariable graphique (M1), ne pas appliquer un programme de reconnaissance de caractères sur cette marque,
- si elle est identifiée en tant que caractère initial (M2), appliquer automatiquement un programme de reconnaissance de caractères sur cette marque.

38. Procédé selon l'une des revendications 32 à 37, **caractérisé par** l'étape suivante :

- conserver ou incorporer automatiquement dans l'image remplie (80) les pixels des marques de la liste (22) correspondant aux portions invariables graphiques (M1) et aux caractères initiaux (M2) qui n'ont pas fait l'objet d'une saisie.

39. Procédé selon l'une des revendications 22 à 38, **caractérisé par** l'étape suivante :

- calculer automatiquement les dimensions de chaque caractère saisi pour que celles-ci soient compatibles avec les portions invariables graphiques (M1) et avec la fenêtre de saisie (20), et que le caractère saisi soit placé correctement dans l'image remplie (80).

40. Procédé selon l'une des revendications 22 à 39, **caractérisé par** l'étape suivante :

- activer des moyens d'édition de caractères sur commande d'un programme de pointeur déplacé par l'utilisateur en un point prédéterminé d'une fenêtre de saisie (20) de l'image initiale (12) à partir duquel au moins un caractère saisi doit être placé.

41. Procédé selon l'une des revendications 22 à 40, **caractérisé par** l'étape suivante :

- permettre l'ouverture de chaque fenêtre de saisie (20) par l'utilisateur à l'aide d'un programme de pointeur et d'un programme de multifenêtrage.

42. Procédé selon l'une des revendications 22 à 41, **caractérisé par** au moins une étape de reproduction de l'image remplie (80) sous forme stable - notamment par impression, ou mémorisation sur un support d'enregistrement à écriture unique -.

43. Produit logiciel apte à être chargé dans la mémoire vive d'un système informatique pour la mise en oeuvre d'un procédé selon l'une des revendications 22 à 42 de façon à réaliser un dispositif selon l'une des revendications 1 à 21.

44. Support d'enregistrement adapté pour pouvoir être lu par un lecteur relié à un système informatique, **caractérisé en ce qu'**il comprend un programme enregistré adapté pour pouvoir être chargé en mémoire vive du système informatique et le programmer pour mettre en oeuvre un procédé selon l'une des revendications 22 à 42, de façon à réaliser un dispositif selon l'une des revendications 1 à 21.

**Patentansprüche**

1. Datenverarbeitungsvorrichtung zum automatischen, computergestützten ausfüllen von Drucksachen, welche Markierungen enthalten - insbesondere Rahmen, Ränder, Linien, Spalten, Rasterungen, Markierungspunkte, Zeichen, Grafiken, Buchstaben und alphanumerische Zeichen enthalten können - und in denen Buchstaben eingefügt werden sollen. Diese Vorrichtung schließt Mittel der numerischen Datenverarbeitung ein, die angepasst und programmiert sind um:

- Speichern und Anzeigen auf einem elektronischen Bildschirm (5) eines eine auszufüllende Drucksache repräsentierenden Bildes, Initialbild (12) genannt, zu ermöglichen,

- automatisch Markierungen entsprechende Teile des Initialbildes (12) zu erkennen,
- das öffnen mindestens eines Fensters, Eingabefenster (20) genannt, welches einen Teilbereich der Drucksache in der mindestens ein Buchstabe eingefügt werden soll abdeckt zu erlauben,
- sowie automatisch in jedem Eingabefenster (20) diejenigen Bereiche des Initialbildes, Invariable Graphische Bereiche (M1) genannt, welche sich über das Eingabefenster erstreckende Markierungen entsprechen, aber mindestens eine Abmessung die über einen vorbestimmten Wert liegt und/oder unter einem zweiten vorbestimmten Wert liegt zu erkennen.

2. Vorrichtung nach Anspruch 1, charakterisiert durch Invariable Graphische Bereiche (M1) welche sich über eine im Verhältnis zu mindestens einer Abmessung des Eingabefensters (20) definierten Abmessung hinaus erstrecken.

3. Vorrichtung nach Anspruch 2, charakterisiert durch Invariable Graphische Bereiche (M1) die sich über die Grenzen des Eingabefensters (20) erstreckenden Markierungen entsprechen.

4. Vorrichtung nach einem der Ansprüche 1 bis 3, charakterisiert durch Mittel der Datenverarbeitung, die angepasst und programmiert sind um:

- Das Aktivieren von Mitteln zur Buchstabenbearbeitung, welche die Eingabe mindestens eines Buchstabens, Eingabebuchstabe genannt, ermöglichen und geeignet sind diesen an einen vorbestimmten Punkt mindestens eines Eingabefensters (20) des Initialbildes (12) zu platzieren, zu ermöglichen.
- Das Automatische Modifizieren jedes Teiles des Initialbildes (12) innerhalb des Eingabefensters (20), der von mindestens einem Eingabebuchstaben bedeckt wird, mit Ausnahme jener Invariablen Graphischen Bereiche (M1) die unverändert bleiben zu ermöglichen, und auf diese Weise zu ermöglichen ein Bild der Drucksache, ausgefülltes Bild (80) genannt, zu erstellen.

5. Vorrichtung nach einem der Ansprüche 1 bis 4, charakterisiert durch Mittel der Datenverarbeitung, welche angepasst sind um Teile des Initialbildes (12) , welche sich von einer vorbestimmten Farbe, Hintergrundfarbe genannt, unterscheiden automatisch als Markierungen zu erkennen.

6. Vorrichtung nach einem der Ansprüche 1 bis 5, charakterisiert durch Mittel der Datenverarbeitung, welche angepasst sind um in jedem Eingabefenster (20) jene Teile des Initialbildes (12), Initialbuchstaben (M2) genannt, welche einer Markierung entsprechen die sich gänzlich über das Eingabefenster (20) erstreckt und die nicht als Invariabler Graphischer Bereich (M1) erkannt wurde, automatisch zu erkennen.

7. Vorrichtung nach Anspruch 6, charakterisiert durch Mittel der Datenverarbeitung die angepasst und programmiert sind um automatisch jeden Teil des Initialbildes (12) im Eingabefenster (20) durch entfernen der Invariablen Graphischen Bereiche (M1) und beibehalten der Initialbuchstaben (M2) zu verändern.

8. Vorrichtung nach Anspruch 4 und nach einem der Ansprüche 6 oder 7, charakterisiert durch Mittel der Datenverarbeitung, welche angepasst sind um vor dem verändern des Bildes des Eingabefensters (20) automatisch mindestens einen der Initialbuchstaben (M2), welcher mindestens teilweise von einem Eingabebuchstaben bedeckt wird zu löschen, um das ausgefüllte Bild (80) zu erstellen.

9. Vorrichtung nach Anspruch 7 oder 8, charakterisiert durch Mittel der Datenverarbeitung, welche ein Programm zum erkennen von Buchstaben enthalten, das geeignet ist um jedem Initialbuchstaben (M2) seiner Form entsprechend einen Identifizierungscode zuzuordnen, welcher ausgehend von einer der bekannten Objektformen aus einer Klasse von vorbestimmten, bekannten Objektformen gespeichert wurde, sowie durch Mittel der Datenverarbeitung, welche angepasst und programmiert sind um dieses Programm zum erkennen von Buchstaben für mindestens einen der erkannten Initialbuchstaben (M2) in mindestens einem Eingabefenster (20) auszuführen.

10. Vorrichtung nach einem der Ansprüche 1 bis 9, charakterisiert durch Mittel der Datenverarbeitung, welche mindestens ein Programm zur numerischen Bearbeitung von in einem Tabellenkalkulationsprogramm ausgewählten Daten, ein Programm zu Textverarbeitung, sowie ein Programm zur numerischen Bildverarbeitung enthalten, welche entsprechend der anhand der auszufüllenden Drucksache vorbestimmten Umständen konfiguriert sind, sowie durch Mittel der Datenverarbeitung, welche angepasst sind um diejenigen Daten als Initialbuchstabe (n) zu definieren, die vom besagten Programm zur numerischen Datenverarbeitung generiert wurden.

11. Vorrichtung nach einem der Ansprüche 1 bis 10, charakterisiert durch ein Initialbild (12) das ein numerisches, auf Pixel basierendes Bild ist, sowie durch Mittel der Datenverarbeitung, welche Mittel zur Analyse des Initialbildes (12) beinhaltet, welche angepasst sind um automatisch eine dynamische Liste (22) aller Markierungen des Initialbildes (12) zu erstellen, wobei jede Markierung dieser Liste (22) aus einer einzigen, zusammenhängenden Menge von Pixeln, welche als Koordinaten dargestellt sind, und deren Farbwert mindestens eine vorbestimmte Bedingung erfüllt.

**12.** Vorrichtung nach Anspruch 11, charakterisiert durch Mittel zur Analyse des Initialbildes (12), welche Mittel zur Schwellenwertbildung und/oder Filterung beinhalten, die angepasst sind um automatisch, vom Initialbild (12) ausgehend, ein Bild (23), dessen Farben einer Farbe aus einer vorbestimmten Menge von Farben entspricht, welches eine Farbe beinhaltet, die der Hintergrundfarbe des Bildes entspricht, sowie dadurch, dass jede einzelne Markierung aus der Liste (22) eine zusammenhängenden Menge von Pixeln sind, deren Farbwert sich vom Farbwert der Hintergrundfarbe unterscheidet.

**13.** Vorrichtung nach einem der Ansprüche 11 oder 12, charakterisiert dadurch, dass jede Markierung aus der Liste (22) aus einer zusammenhängenden Menge von Pixeln mit gleichem Farbwert besteht.

**14.** Vorrichtung nach einem der Ansprüche 11 bis 13, charakterisiert durch Mittel der Datenverarbeitung, welche angepasst sind um automatisch die Koordinaten jeder Markierung der Liste (22) mit denen der Pixel des Eingabefensters (20) zu vergleichen, um automatisch zu bestimmen ob Pixel aus dieser Markierung existieren deren Koordinaten außerhalb vorbestimmter Grenzen liegen - insbesondere außerhalb des Eingabefensters (20) -, wobei eine solche Markierung als Invariabler Graphischer Bereich (M1) erkannt wird.

**15.** Vorrichtung nach Anspruch 14, charakterisiert durch Mittel der Datenverarbeitung, welche angepasst sind um automatisch die Koordinaten der Pixel jeder Markierung der Liste (22) mit den Pixeln des Eingabefensters (20) zu vergleichen, um automatisch festzustellen ob alle Pixel dieser Markierung Koordinaten innerhalb vorbestimmter Grenzen liegen - insbesondere innerhalb des Eingabefensters (20) -, wobei eine solche Markierung als Initialbuchstabe (M2) erkannt wird.

**16.** Vorrichtung nach den Ansprüchen 14 und 15, charakterisiert durch Mittel der Datenverarbeitung, welche angepasst sind um automatisch und nacheinander jede Markierung aus der Liste (22) zu untersuchen und

- wenn diese als Invariabler Graphischer Bereich (M1) erkannt wird das Programm zur Buchstabenerkennung nicht auf diese Markierung angewendet,
- wenn diese als Initialbuchstabe (M2) erkannt wird das Programm zur Buchstabenerkennung automatisch auf diese Markierung angewendet.

**17.** Vorrichtung nach einem der Ansprüche 11 bis 16, charakterisiert durch Mittel der Datenverarbeitung, welche angepasst sind um automatisch im ausgefüllten Bild (80) diejenigen Markierungen aus der Liste (22) beizubehalten oder einzufügen, die Invariablen Graphischen Bereichen (M1) oder Initialbuchstaben (M2) sind und nicht Subjekt einer Eingabe waren.

**18.** Vorrichtung nach einem der Ansprüche 1 bis 17, charakterisiert durch Mittel der Datenverarbeitung, welche angepasst sind um automatisch die Abmessungen jedes eingegebenen Buchstabens zu berechnen, so dass diese mit den Invariablen Graphischen Bereichen (M1) und dem Eingabefenster (20) kompatibel sind und der eingegebene Buchstabe korrekt im ausgefüllten Bild (80) platziert wird.

**19.** Vorrichtung nach einem der Ansprüche 1 bis 18, charakterisiert durch Mittel der Datenverarbeitung, welche angepasst und programmiert sind um auf Befehl eines Programms für einen vom Benutzer bewegten Zeiger Mittel zur Eingabe von Buchstaben an einem vorbestimmten Punkt des Eingabefensters (20) des Initialbildes (12) mittels dessen mindestens ein Eingabebuchstabe platziert werden soll zur Verfügung zu stellen.

**20.** Vorrichtung nach einem der Ansprüche 1 bis 19, charakterisiert durch Mittel der Datenverarbeitung, welche angepasst und programmiert sind um das Öffnen jedes Eingabefensters (20) durch den Benutzer mittels Zeigerprogramm und graphischer Benutzeroberfläche zu ermöglichen.

**21.** Vorrichtung nach einem der Ansprüche 1 bis 20, charakterisiert durch Mittel der Datenverarbeitung, welche angepasst sind um das reproduzieren des ausgefüllten Bildes (80) in haltbarer Weise zu reproduzieren - insbesondere durch Ausdruck oder Speicherung auf einem nicht wiederbeschreibbaren Datenträger - zu ermöglichen.

**22.** In einer Vorrichtung welche Mittel der numerischen Datenverarbeitung und mindestens einen elektronischen Bildschirm (5) beinhaltet ein Verfahren zum automatischen ausfüllen von Drucksachen durch einen Computer, welche Markierungen, insbesondere Rahmen, Ränder, Linien, Spalten, Rasterungen, Markierungspunkte, Zeichen, Grafiken, Buchstaben und alphanumerische Zeichen, enthalten und in denen Buchstaben eingefügt werden sollen, wobei das Verfahren diese Schritte beinhaltet:

- Auf einem elektronischen Bildschirm (5) ein Bild, Initialbild (12) genannt, anzuzeigen, welches eine auszufüllende Drucksache darstellt.
- Im Initialbild (12) automatisch Bereiche zu erkennen, die Markierungen entsprechen.
- In diesem Initialbild (12) mindestens ein Fenster, Eingabefenster (20) genannt, das einen Teilbereich der Drucksache, in welcher mindestens ein Buchstabe eingefügt werden soll, bedeckt zu öffnen.
- Sowie automatisch in jedem Eingabefenster (20) diejenigen Bereiche, Invariabler Graphische Bereiche (M1) genannt, zu erkennen, welche Markierungen enthalten dies sich in das Eingabefenster (20) erstrecken, aber Mindestens eine Abmessung haben die größer als ein vorbestimmter Wert ist, oder kleiner als in zweiter vorbestimmter Wert ist.

23. Verfahren nach Anspruch 22, charakterisiert durch Invariable Graphische Bereiche (M1), welche Markierungen entsprechen, die mindestens in einer Abmessung über einen im Verhältnis zu mindestens einer Abmessung des Eingabefensters (20) definierten Bereich hinausgehen.

24. Verfahren nach Anspruch 23, charakterisiert durch Invariable Graphische Bereiche (M1), welche Markierungen entsprechen, die sich über die Grenzen des Eingabefensters (20) hinaus erstrecken.

25. Verfahren nach einem der Ansprüche 22 bis 24, charakterisiert durch diese Schritte:

- Das Aktivieren von Mitteln zum bearbeiten von Buchstaben, welche angepasst sind um mindestens einen Buchstaben, Eingabebuchstabe genannt, zu erlauben, und diesen danach an einem vorbestimmten Punk mindestens eines Eingabefensters (20) des Initialbildes (12) zu platzieren.
- Das automatische Modifizieren jedes Bereichs des Initialbildes (12) im Eingabefenster (20), welcher von mindestens einem Eingabebuchstaben bedeckt wird, mit Ausnahme der Invariablen Graphischen Bereiche, die unverändert gelassen werden, so dass ein Bild, ausgefülltes Bild (80) genannt, der Drucksache entsteht.

26. Verfahren nach einem der Ansprüche 22 bis 25, charakterisiert durch automatisches als Markierungen erkennen von Bereichen des Initialbildes, die eine von einer vorbestimmten Farbe, Hintergrundfarbe genannt, abweichende Farbe haben.

27. Verfahren nach einem der Ansprüche 22 bis 26, charakterisiert durch folgenden Schritt:

- Automatisches Erkennen jener Bereiche des Initialbildes (12) in jedem Eingabefenster (20), Initialbuchstaben genannt (M2), welche Markierungen entsprechen die sich innerhalb des gesamten Eingabefensters (20) erstrecken und nicht als Invariable Graphische Bereiche (M1) erkannt wurden.

28. Verfahren nach Anspruch 27, charakterisiert durch einen Schritt, welcher darin besteht automatisch jeden Bereich des Initialbildes (12) im Eingabefenster (20) zu verändern, indem Invariable Graphische Bereiche (M1) entfernt, sowie Initialbuchstaben (M2) beibehalten werden.

29. Verfahren nach Anspruch 25 und einem der Ansprüche 27 oder 28, charakterisiert durch einen Schritt, welcher darin besteht vor dem Verändern des Initialbildes (12) im Eingabefenster (20) zum ausgefüllten Bild (80), im Eingabefenster (20) mindestens jeden der Initialbuchstaben (M2) zu entfernen welcher mindestens teilweise von einem Eingabebuchstaben bedeckt würde.

30. Verfahren nach einem der Ansprüche 26 bis 29, charakterisiert durch einen Buchstabenerkennungsschritt, der geeignet ist jedem Initialbuchstaben (M2) seiner Form entsprechend einen Identifizierungscode zuzuordnen, welcher ausgehend von einer der bekannten Objektformen aus einer Klasse von vorbestimmten, bekannten Objektformen gespeichert wurde, sowie dadurch dass dieser Schritt mindestens für einen erkannten Initialbuchstaben (M2) in mindestens einem Eingabefenster (20) ausgeführt wird.

31. Verfahren nach einem der Ansprüche 22 bis 30, charakterisiert durch die folgenden Schritte:

- Das Verarbeiten von Daten mittels eines Programms, ausgewählt aus einem Tabellenkalkulationsprogramm, einer Textverarbeitung, und einem Programm zur numerischen Bildverarbeitung, welches entsprechend in Bezug auf die auszufüllende Drucksache vorbestimmter Bedingungen eingestellt wurde.
- Das Assoziieren jedes Eingabefensters (20) mit einem Eingang und/oder einem Ausgang eines Programms zur numerischen Datenverarbeitung.
- Das Behandeln der von besagtem Programm zur numerischen Datenverarbeitung generierten Daten als eingegebene Buchstaben.

**32.** Verfahren nach einem der Ansprüche 22 bis 31, charakterisiert durch folgende Schritte:

- Speichern des Initialbildes (12) als numerisches, auf Pixel basierendes Bild.
- Analyse des Initialbildes (12) und automatisches erstellen einer dynamischen Liste (22) aller Markierungen des Initialbildes (12), wobei jede Markierung der Liste (22) von einer einzelnen Menge zusammenhängender Pixel, welche durch ihre Koordinaten dargestellt sind und deren Farbwert mindestens eine vorbestimmte Bedingung erfüllt.

**33.** Verfahren nach Anspruch 32, charakterisiert durch folgende Schritte:

- Schwellenwertbildung und/oder Filtrierung des Initialbildes (12) um automatisch, ausgehend vom Initialbild (12), ein Bild (23) dessen Farben zu einer Menge vordefinierter Farbe, darunter eine dem Hintergrund des Bildes entsprechende Farbe, zu erstellen.
- Speichern jeder Markierung in der Liste (22) als Menge zusammenhängender Pixel mit einer sich von Farbwert der Hintergrundfarbe unterscheidenden Farbwert.

**34.** Verfahren nach einem der Ansprüche 32 oder 33, charakterisiert dadurch, dass jede Markierung in der Liste (22) von einer zusammenhängenden Menge Pixel, welche den gleichen Farbwert haben, gebildet wird.

**35.** Verfahren nach einem der Ansprüche 32 bis 34, charakterisiert durch folgende Schritte:

- Automatisches Vergleichen der Koordinaten der Pixel jeder Markierung aus der Liste (22) mit den Pixeln des Eingabefensters (20).
- Automatische Entscheidung ob eines davon zum Eingabefenster gehört.
- Und, wenn dies der Fall ist, automatische Entscheidung ob es Pixel der gleichen Markierung gibt, deren Koordinaten außerhalb vorbestimmter Grenzen liegen - insbesondere außerhalb der Grenzen des Eingabefensters (20) - so dass diese Markierung als Invariabler Graphischer Bereich (M1) erkannt wird.

**36.** Verfahren nach einem der Ansprüche 32 bis 35, charakterisiert durch die folgenden Schritte:

- Automatischer Vergleich der Koordinaten der Pixel jeder Markierung aus der Liste (22), mit denen eines Eingabefensters (20)
- Automatische Entscheidung ob eines davon zum Eingabefenster (20) gehört.

- Und, wenn dies der Fall ist, automatische Entscheidung ob alle Pixel dieser Markierung Koordinaten innerhalb vorbestimmter Grenzen haben - insbesondere innerhalb des Eingabefensters (20) - so dass diese Markierung als Initialbuchstabe (M2) erkannt wird.

**37.** Verfahren nach einem der Ansprüche 35 und 36, charakterisiert durch folgende Schritte:

- Automatische Untersuchung jeder Markierung der Liste (22), und,
- Wenn diese als Invariabler Graphischer Bereich (MI) erkannt wurde, kein Programm zur Buchstabenerkennung auf diese Markierung anzuwenden.
- Wenn diese als Initialbuchstabe (M2) erkannt wurde, automatisch eine Programm zur Buchstabenerkennung auf diese Markierung anzuwenden.

**38.** Verfahren nach einem der Ansprüche 32 bis 37, charakterisiert durch folgenden Schritt:

- Automatisches Beibehalten oder Einfügen der Pixel der Markierungen aus der Liste (22) welche Invariablen Graphischen Bereichen (M1) und Initialbuchstaben (M2), welche nicht Subjekt einer Eingabe waren, entsprechen in das ausgefüllte Bild (80).

**39.** Verfahren nach einem der Ansprüche 22 bis 38, charakterisiert durch folgenden Schritt:

- Automatische Berechnung der Abmessungen jedes Eingabebuchstabens, damit diese mit den Invariablen Graphischen Bereichen (M1) und mit dem Eingabefenster (20) kompatibel werden, sowie damit der Eingabebuchstabe korrekt im ausgefüllten Bild (80) platziert wird.

**40.** Verfahren nach einem der Ansprüche 22 bis 39, charakterisiert durch folgenden Schritt:

- Aktivieren von Mitteln zur Eingabe von Buchstaben, auf Befehl eines Programms für einen vom Benutzer bewegten Zeiger Mittel zur Eingabe von Buchstaben an einem vorbestimmten Punkt des Eingabefensters (20) des Initialbildes (12) mittels dessen mindestens ein Eingabebuchstabe platziert werden soll.

**41.** Verfahren nach einem der Ansprüche 22 bis 40, charakterisiert durch folgenden Schritt:

- Möglichkeit jedes Eingabefenster (20) durch den Benutzer mittels eines Zeigerprogramms oder mittels einer graphischen Benutzeroberfläche zu öffnen.

42. Verfahren nach einem der Ansprüche 22 bis 41, charakterisiert durch mindestens einen Schritt, in welchem das ausgefüllte Bild (80) in haltbarer Form - insbesondere durch Ausdruck oder Speicherung auf einem nicht wiederbeschreibbaren Datenträger - reproduziert wird.

43. Ein Softwareprodukt, welches geeignet ist in den Arbeitsspeicher eines Datenverarbeitungssystems geladen zu werden, um ein Verfahren nach einem der Ansprüche 22 bis 42 zu bewerkstelligen, so dass eine Vorrichtung nach einem der Ansprüche 1 bis 21 entsteht.

44. Ein Datenträger, welcher geeignet ist von einem an ein Datenverarbeitungsgerät angeschlossenem Lesegerät gelesen zu werden, charakterisiert durch das Beinhalten eines gespeicherten Programms, welches geeignet ist in den Arbeitsspeicher eines Datenverarbeitungssystems geladen zu werden und dieses zu programmieren um ein Verfahren nach einem der Ansprüche 22 bis 42 zu bewerkstelligen, so dass eine Vorrichtung nach einem der Ansprüche 1 bis 21 entsteht.

**Claims**

1. Device and method for automated filling of printed documents containing marks with the aid of a computer - note that those may contain frames, borders, lines, columns, patterns, markers, signs, graphics, alphanumerical characters or signs, ... - where contained characters have to be edited, this device and method incorporating a computer that is configured and adapted to:

   • Allow the memorization and displaying on a screen (5) of an image called initial image (12), representing a printed document that is to be filled,
   • Automatically identify the corresponding marks in the initial image(12),
   • Allow the creation of at least one edition-frame (20), which covers a partial zone of the printed document in which at least one character is to be edited,
   • Automatically identify, in each edition-frame (20), each of the subsets of the initial images, which are called invariable graphical subsets (M1), corresponding to marks that extend into the edition-frame (20), but have at least 1 dimension that is superior to a predetermined value and/or inferior to another predetermined value.

2. Device and method of claim 1, comprising invariable graphical subsets (M1) that correspond to marks which extend more than the edition-frame (20) in at least one dimension.

3. Device and method of claim 2, comprising invariable graphical subsets (M1) corresponding to marks which extend over the limits of the edition-frame (20).

4. Device and method of one of the claims 1 to 3, comprising a computer that is configured and programmed in order to:

   • Allow the activation of tools adapted for the edition of characters in order to allow the edition of at least one character, called edited character, and able to place it automatically at a predetermined point of the edition-frame,
   • Automatically modify each subset of the original image (12) within the edition-frame (20) covered by at least one edited character, with the exception of invariable graphical subsets (M1), which remain unchanged, and thereby generate an image which is called filled image (80) of the printed document.

5. Device and method of one of the claims 1 to 4, comprising a computer which is configured to automatically identify in each edition-frame (20) each of those subsets of the initial image (12) which have a different color that a predetermined color, called background color.

6. Device and method of one of the claims 1 to 5, comprising a computer that is configured to automatically identify in each edition-frame (20), each of those subsets of the initial image (12), called initial characters (M2), corresponding to a mark that lies entirely within the edition-frame (20) and is not identified as invariable graphical subset (M1).

7. Device and method of the claim 6, comprising a computer that is configured and programmed to automatically modify each subsets of the initial image (12) within the edition-frame (20), by eliminating the invariable graphical subsets (M1) and conserving the initial characters (M2).

8. Device and method of the claim 4 and one of the claims 6 or 7, comprising a computer which is configured to modify the image of the edition-frame (20) in order to create the filled image (80), automatically erase at least every of the initial characters (M2) that would be at least partially covered by an edited character, within the edition-frame (20).

9. Device and method of the claim 7 or 8, comprising a computer, which is able to attribute each initial character (M2) with a memorized identification code, according to its family of predetermined object-forms, where the computer is adapted and programmed to execute a character recognition program at least for every initial character (M2) identified within at least one edition-frame (20).

10. Device and method of one of claims 1 to 9, comprising a computer that incorporates at least one digital data processing program, chosen among a spreadsheet, a text-editor a image-editor, configured according to predetermined conditions that are imposed by the printed document which has to be filled, tools to allow the user to associate each edition-window to an input or output interface of a computer-program, and that the computer is adapted to define data as edited characters generated by this computer-program.

11. Device and method of one of the claims 1 to 10, comprising the fact of the initial image (12) being a digital pixelised image, where the computer incorporates tools for analysis of the initial image (12) which are adapted to automatically generate a dynamic list (22) of all marks in the initial image (12), each mark of that list (22) being formed by a single set of adjacent pixels, selected according to their coordinates and have a color code which satisfies at least one predetermined condition.

12. Device and method of claim 11, comprising the tools for analyzing the initial image (12) which incorporate means sorting and/or filtering adapted to automatically generate an image (23) from the initial image (12), in which the colors are members of a palette with a predetermined number of colors, one of those colors corresponding to the background color of the image, and each mark in the list (22) being a set of adjacent pixels that have a color code which is different from the background color.

13. Device and method of one of the claims 11 or 12, comprising the step of each mark in list (22) being formed by a set of adjacent pixels which have the same color code.

14. Device and method according to one of claims 11 to 13, comprising a computer which is configured to automatically compare the coordinates of the pixels in each mark of list (22) with those of pixels within a edition-frame (20), in order to automatically determine if one of them is within that edition-frame (20), and, if that is the case, to automatically determine if there exist pixels of that same mark, which have coordinates exceeding predetermined limits - usually outside the edition-frame (20) - in a way that this mark is identified as invariable graphical subset (M1).

15. Device and method of claim 14, comprising a computer that is configured to automatically compare the coordinates of the pixel in each mark of list (22) with those of pixels contained in a edition-frame (20), in order to automatically determine if one of them is part of the edition-frame (20), and, if the case, to determine automatically if all the pixels of that mark have coordinates included within predefined limits - usually those of the edition-frame (20) - in order to identify that mark as being an initial character (M2).

16. Device and method of the claims 14 and 15, comprising a computer that is configured to automatically examine each mark of list (22), and,

- If it is identified as being an invariable graphical subset (M1), not applying any character recognition program to this mask
- If it is identified as initial character (M2), applying automatically a program of character recognition.

17. Device and method of one of the claims 11 to 16, comprising a computer which is configured to automatically conserve or incorporate the pixels of the marks in list (22) that correspond to invariable graphical subsets (M1) and initial characters (M2) that have not been edited to the filled image (80).

18. Device and method of one of the claims 1 to 17, comprising a computer, which is configured to automatically calculate the dimensions of each edited character, in order to render them compatible with the invariable graphical subsets (M1) and the edition-frame (20) and in order to place it correctly into the filled image (80).

19. Device and method of one of the claims 1 to 18, comprising a computer that is configured and programmed to activate tools for character edition upon command from a pointer-program (mouse driver) which is guided by the user to a predetermined point in a edition-frame (20) of the initial image (12), used to place at least one edited character.

20. Device and method of one of the claims 1 to 19, comprising a computer being configured and programmed to allow the definition of each edition-frame (20) by the user using a pointer-program and a graphical user interface.

21. Device and method of one of the claims 1 to 20, comprising a computer being configured to allow the reproduction of the filled image (80) in stable form - usually by printing or writing to read-only storage-media.

22. In a device and method comprising a computer with at least one screen (5) for electrical display, a method for automated, computer-aided filling of printed documents which contain marks, usually containing frames, borders, lines, columns, patterns, markers, signs, alphanumerical or graphical signs, ... and in which the characters are to be edited. This method containing the steps:

- Display of the image, called initial image (12), on a screen (5), representing a printed document,
- Identifying automatically, in each edition-frame (20) that has at least one character requiring edit, each individual subset of the initial image, which are called invariable graphical subsets,
- Defining, within this initial image (12), at least one frame, called edition-frame, covering a partial zone of the printed document, in which at least one character is to be edited,
- And identifying automatically, within each edition-frame (20), each of the subsets of the initial image, that are called invariable graphical subsets (M1), corresponding to the marks which extend into the edition-frame (20) and has at least one dimension which is superior to a predetermined value and/or inferior to another predetermined value.

23. Method of claim 22, comprising the steps of the invariable graphical subsets (M1) corresponding to mark which are superior to the size of the edition-frame in at least one dimension (20).

24. Method of claim 23, comprising invariable graphical subsets (M1) corresponding to marks which extend over the limits of the edition-frame (20).

25. Method of one of the claims 22 to 24,comprising the steps of:

- Activation of character-editing tools, which are configured to allow the edition of at least one character, called edited character, and able to place it on a predetermined point of at least one edition-frame (20) of the initial image (12),
- Automatically modifying each part of the initial image (12) within the edition-frame (20) covered by at least one edited character, with the exception of the invariable graphical subsets (M1) that remain unchanged, and thereby generation of the image called filled image (80), of the printed document.

26. Method of one of the claims 22 to 25, comprising a step where the marks of the initial image, which are parts of the initial image (12) having a distinct and predetermined color, called background color, are automatically identified.

27. Method of one of the claims 22 to 26,comprising the steps of:

- Automated identification of each part of the initial image (12) within the edition-frame (20), which is called initial character (M2), corresponding to a mark which fits entirely into the edition-frame (20), and that is not identified to be an invariable graphical subset (M1).

28. Method of claim 27, comprising the steps of automated modification of each portion of the initial image (12) in which the edition-frame (20) by eliminating the invariable graphical subsets (M1) while preserving the initial characters (M2).

29. Method of claim 25 and of one of the claims 27 or 28, comprising the steps of consisting of modifying the initial image (12) in the edition-frame (20) in order to create the filled image (80) and to erase at least each of the initial characters (M2) from the edition-frame (20), which would have been partially covered by the edited character.

30. Method of one of the claims 26 to 29, comprising the step of a recognition being able to attribute each initial character (M2) with a identification code, that has been memorized from one of the form of one the objects in the family of known objects, depending on its form, in a way that this step of recognition is executed for at least the initial characters (M2) identified in at least one edition-frame (20).

31. Method of one of the claims 22 to 30, comprising the steps:

- Processing data that has been selected with a spreadsheet or text-editor, and a program for digital image processing, configured according to the predetermined conditions that are defined by the printed document that has to be filled,
- Associating to each edition-frame (20) an input and/or an output interface of a digital data processing program,
- Defining the data obtained from that program as edited characters.

32. Method of one of the claims 22 to 31,comprising the steps of:

- Memorization of the initial image (12) as digital pixelised image,
- Analyzing the initial image (12) and automatically generating a dynamic list (22) of all the marks in that initial image (12), where each mark in that list (22) is formed by a single set of adjacent pixels, selected according to their coordinates and having a color code satisfying to at least one predetermined condition.

**33.** Method of claim 32, comprising the steps of :

- Sorting and/or filtering the initial image (12) in order to automatically generate, based of this initial image (12), an image (23) with colors that are part of a palette that contains a predetermined number of colors, among which is one color that corresponds to the background color of the image,
- Sorting each mark in the list (22) as a set of adjacent pixels having the same color code, which is unequal to the background color.

**34.** Method of one of the claims 32 to 33, comprising the fact that each element of the list (22) is being formed of an adjacent set of pixels, having the same color.

**35.** Method of one of the claims 32 to 34, comprising the steps of:

- Automated comparing of the coordinates of pixels from each mark in the list (22) with those of the pixels within the edition-frame (20),
- Determining automatically if one them is part of that edition-frame (20),
- And, if so, determining automatically if pixels exist within that same mark, which are outside of predetermined bounds - usually outside of the bound of the edition-frame (20) -, in a way that enables to identify that mark as being an invariable graphical subset (M1).

**36.** Method of one of the claims 32 to 35, comprising the steps :

- Automatically comparing the coordinates of the pixels of each mark in the list with those of the pixels within an edition-frame (20),
- Determining automatically if all pixels of that mark have coordinates, which are within, predetermined limits - usually those of the edition-frame (20) -, in a way that enables to identify these marks as being initial characters (M2).

**37.** Method of the claims 35 and 36, comprising the steps of :

- Automated examination of each mark in the list (22), and,
- If it is identified as being a invariable graphical subset (M1), not applying a character recognition program to that mark,
- If it is identified as being an initial character (M2) however, applying automatically a character recognition program on that mark.

**38.** Method of one of the claims 32 to 37, comprising the steps :

- Automated conservation or incorporation of the pixels from marks, which correspond to invariable graphical subsets (M1) and to initial characters (M2) therefore not being subject of any editing, in the list (22) into the filled image (80).

**39.** Method of one of the claims 22 to 38, comprising the steps :

- Automated calculation of the dimension of each edited character, in order to render them compatible to the invariable graphical subsets (M1) and to the edition-frame (20), and in a way that the edited character is correctly positioned in the filled image (80).

**40.** Method of one of the claims 22 to 39,comprising the steps of:

- Activation of tools that enable to edit the characters up command from a pointer-program, guided by a user, at a predetermined point of the edition-frame (20) of the original image (12), starting from which at least one edited character should be positioned.

**41.** Method of one of the claims 22 to 40,comprising the steps of:

- Allowing defining each edition-frame (20) by the user, using a pointer-program and a graphical user interface.

**42.** Method of one of the claims 22 to 41, comprising at least one step in which the filled image (80) is reproduced under a stable form - usually by printing or writing to read-only storage-media.

**43.** Software product able to be loaded into the random access memory of a computer in order to realize a method of one of the claims 22 to 42, in a way that a device and method of one of the claims 1 to 21 is created.

**44.** Storage support that is adapted to be read by a drive that is connected to a computer, comprising the steps of containing a stored program that is configured to be loaded into the random access memory of a computer and program to be a method of one of the claims 22 to 45, in a way that a device and method of one of the claims 1 to 21 is created.

Fig 1

EP 1 242 911 B1

Fig 2

Fig 3

| DESIGNATION | Q | PU | MONTANT PAR ARTICLE |
|---|---|---|---|
| Table | 2 | | |
| Chaise | 4 | | |
| Lampe | 5 | | |
| Bureau | 7 | | |

Désignation
Nombre
Quantité
Prix Unitaire
Montant par Article
Calcul Total

Saisie OCR
Saisie/Edition Operateur
Saisie/Edition Source
Edition. Application

Fig 4a

Fig 4b

24

23

Fig 4c

Fig 4d

25

26

| N° | Code | Pixels |
|---|---|---|
| 0 | 1 | (1,4) (1,5) (2,2) (2,3) (2,5) (3,1) (3,2) (3,3) (3,4) (3,5 |
| 1 | 1 | (5,4) (5,5) (5,6) (5,7) (5,8) (6,4) (6,8) (7,4) (7,8) (8,4 |
| 2 | 1 | — — — — — — — —. — |
| 3 | 1 | — — — — — — — — — |
| - | — | — — — — — — — — — |
| nM1 | 1 | — — (xB,yB) — (xA,yA) — — — — |
| — | — | — — — — — — — |
| nM2 | 1 | — (xC,yC) — — (xD,yD) — |

Fig 5

Fig 11

Fig 6a

Fig 6b

Fig 7a

Fig 7b

Fig 8

Fig 10

Fig 9a

Fig 9b

Fig 12a    Fig 12b    Fig 12c

Fig 12d    Fig 12e    Fig 12f

Fig 13

| MARCHE N° 3788 | | | DATE 26/11/99 | |
|---|---|---|---|---|
| DESIGNATION | Q | PU | MONTANT PAR ARTICLE | |
| Table | 2 | 10 | 20 | |
| Chaise | 4 | 2.5 | 10 | |
| Lampe | 6 | 5 | 30 | |
| Ecran | 8 | 20 | 160 | |
| Bureau | 7 | 10 | 70 | |
| Fauteuil | 9 | 30 | 270 | |
| | | SOUS TOTAL | 560 | |
| | | TVA 20,6% | 115.36 | |
| | | TOTAL TTC | 675.36 | |

EP 1 242 911 B1

Fig 14

Fig 15a

PROC

119

120

n = 0

121
x=0,....xmax

122
y=0,...ymax

CHECK(x,y)=0? 123

124

REKURS(x,y,N,0,LI)=0?

125

CORRECT(LI)

126

N=N+1 127

y=y+1 128

x =x+1

129

130

Fig 15b

REKURS

140

141 k = k+1

142 k > Limit ?

150

143 SK[x][y]=N

144 P(x,y) ∈ S[N]

145 i=0,....,i=7

146 CHECK(x+Ux(i),y+Uy(i))=0?

P(x,y) ∈ LI 151

147 REKURS(x+Ux(i),y+Uy(i),N,k,L)=0?

152 = 1

148 i = i+1

149 = 0

CORRECT

Fig 15d

k=0 — 170

i=0,.....,nLI — 171

LI 2 — 172

173

REKURS(LI[i]x,LI[i]y,LI[i]N,0,LI2)=0?

174

CORRECT(LI2)

175

i=i+1

176

CHECK

Fig 15c

160

UK(x,y) = 1? — 162

SK(x,y) =–1? — 163

= 1

= 0

164

165

Fig 15e

X=TF ⌐190

y=0,......, ymax ⌐191

x=0,......, xmax ⌐192

FK[x][y] = X   ? ⌐193

SK[x][y] =−1? ⌐194

SK[x][y] = R ⌐196        R =SK[x][y] ⌐195

P(x,y)∈S[R] ⌐197

x = x+ 1 ⌐198

y= y+1 ⌐199

⌐200

Fig   16